# EUROPEAN PATENT SPECIFICATION

(11) **EP 4 424 599 B1**
(45) Date of publication and mention of the grant of the patent: **28.10.2026**
(21) Application number: 24155164.7
(22) Date of filing: 01.02.2024
(51) Int. Cl.: B64D 13/06

(54) **AIR PRESSURISATION SYSTEM**
LUFTBEDRUCKUNGSSYSTEM
SYSTÈME DE PRESSURISATION D'AIR

(30) Priority: 01.03.2023 GB 202302986
(43) Date of publication of application: 04.09.2024
(73) Proprietor: Rolls-Royce plc, London N1 9FX (GB)
(72) Inventor: Murray, Christopher, Derby, DE24 8BJ (GB)
(74) Representative: Rolls-Royce plc

(56) References cited:
- EP-B1- 3 620 378
- US-A1- 2004 175 313
- US-B2- 10 954 865
- US-B2- 7 306 644

## Description

### TECHNICAL FIELD

The present disclosure relates to air pressurisation systems for providing air to an airframe system. The present disclosure also concerns an aircraft comprising an airframe, a gas turbine engine and an air pressurisation system.

### BACKGROUND

It is known to pressurise a cabin of an aircraft using an air pressurisation system which makes use of engine bleed air which is bled from a compressor section of the core of a gas turbine engine. Bleeding high pressure air from the gas turbine engine reduces its efficiency and thereby increases its fuel consumption.

It is therefore desirable to provide an improved air pressurisation system. Air pressurisation systems which make use of air which is taken from a lower pressure source of a gas turbine engine, such as a bypass duct, and which subsequently compress the air prior to delivering it to the cabin are also known. Some exemplary air pressurisation systems are described in EP3517436 B1, EP3517437 B1 and EP3517438 B1.

Furthermore EP3620378 B1 describes a system including an air pressurization system (APS) and an environmental control system (ECS). The APS is configured to supply pressurized supply air to the ECS. The ECS includes a primary heat exchanger (PHX), an air-driven turbine downstream of the PHX, and a vapor cycle refrigeration system (VCRS) downstream of the PHX. The PHX is configured to cool the supply air using environmental air. The turbine is configured to power a vapor cycle refrigeration system (VCRS) using the supply air. The VCRS is configured to cool the supply air to generate cabin air.

### SUMMARY

According to claim 1 there is provided an air pressurisation system for an aircraft, the air pressurisation system comprising: a blower compressor configured to be mechanically coupled to a spool of a gas turbine engine and configured to receive an inlet flow of gases from a bypass duct of the gas turbine engine; a heat exchanger; a delivery line extending through the heat exchanger and configured to convey gases received from the blower compressor to an airframe port for supply to an airframe system; a catalyst material disposed along the delivery line within the heat exchanger or between the blower compressor and the heat exchanger and configured to catalyse a reaction of volatile organic compounds within gases conveyed by the delivery line; a valve arrangement configured to switch between operation of the air pressurisation system in a baseline mode in which the valve arrangement is configured to allow compressed gases to bypass the heat exchanger, and a cooling mode in which the valve arrangement is configured to divert the compressed air within the delivery line to the heat exchanger for operation in the cooling mode, and wherein the delivery line comprises a cooling path extending through the heat exchanger and a bypass path bypassing the heat exchanger; the valve arrangement is configured to selectively divert conditioned air within the delivery line to the heat exchanger for operation in the cooling mode by actuating a first valve of the valve arrangement to control a flow rate of conditioned air through the cooling path; and the catalyst material is disposed along the cooling path.

It may be that the heat exchanger is configured to receive the coolant from the bypass duct of the gas turbine engine.

The catalyst material may include at least one of: copper, vanadium, platinum, palladium, rhodium, cerium, iron, manganese and/or nickel.

The inlet flow of gases may be a first inlet flow of gases, and the air pressurisation system may further comprise a core bleed line configured to provide a second inlet flow of gases from a compressor of the gas turbine engine to the delivery line in an augmented air supply mode of the air pressurisation system. The catalyst material may be configured to catalyse a reaction of hydrocarbons within gases received from the core bleed line.

The air pressurisation system may comprise an additional catalyst material disposed along the core bleed line and configured to catalyse a reaction of volatile organic compounds within gases conveyed by the core bleed line. Additionally, it may be that the air pressurisation system comprises an additional heat exchanger. The core bleed line may extend through the additional heat exchanger; the additional catalyst material may be disposed within the additional heat exchanger or between the additional heat exchanger and the compressor of the gas turbine engine.

It may be that the air pressurisation system comprises an air treatment apparatus including an air cycle line configured to condition gases received from the blower compressor. The delivery line may be configured to convey compressed gases through the air cycle line of the air treatment apparatus to the airframe port for supply to the airframe system.

In addition, it may be that the air treatment apparatus further comprises a diversion line for receiving air from the blower compressor and configured to bypass the air cycle line. The air treatment apparatus may be configured to mix air from the air cycle line with air from the diversion line to control a temperature of gases received by delivery line. The core bleed line may be further configured to: provide the second inlet flow of gases directly to the diversion line; or mix the second inlet flow of gases with gases from the blower compressor upstream of the diversion line.

The delivery line may include a shut-off valve configured to prevent supply of compressed air to the airframe port at an excessive pressure and/or an excessive temperature. The catalyst material may be disposed between the blower compressor and the shut-off valve.

The air pressurisation system may further comprise a controller configured to control a control valve disposed on the core bleed line and thereby selectively operate the air pressurisation system in: the augmented air supply mode in which the control valve is open, or an unaugmented air supply mode in which the control valve is closed to prevent the second inlet flow of air to the delivery line.

It may be that the air cycle line comprises a sequential fluid pathway through: a first heat exchanger, an air conditioning compressor, a second heat exchanger, a first channel of a reheater, a first channel of a condenser, a water extractor, a second channel of the reheater, an air conditioning turbine and a second channel of the condenser. The air conditioning turbine may be mechanically connected to the air conditioning compressor by a shaft.

It may be that the controller is configured to: receive a flow demand signal; determine whether a flow delivery capacity of the air pressurisation system in the unaugmented mode is sufficient to meet a flow demand corresponding to the flow demand signal; and switch the air pressurisation system into the augmented air supply mode in response to a determination that the flow delivery capacity is insufficient to meet the flow demand.

The controller may be configured to switch the air pressurisation system into the unaugmented air supply mode in response to a determination that the flow delivery capacity of the air pressurisation system in the unaugmented air supply mode is sufficient to meet the flow demand.

It may be that the controller is configured to determine whether the flow delivery capacity of the air pressurisation system in the unaugmented mode is sufficient to meet the flow demand signal by reference to a flow delivery capacity model configured to predict the flow delivery capacity based on one or more of: a rotational speed of the spool of the gas turbine engine; a rotational speed of the blower compressor; a pressure of a flow through the bypass duct of the gas turbine engine; a temperature of the flow through the bypass duct of the gas turbine engine; an altitude of the gas turbine engine; and an airspeed of the gas turbine engine.

It may be that the air pressurisation system is configured to prevent supply of the second inlet flow of gases to the air treatment apparatus at an excessive temperature. The control valve and/or a temperature shut-off valve disposed on the core bleed line may be configured to close (i) autonomously responsive to receiving air at the excessive temperature and/or (ii) by control of the controller or a dedicated temperature shut-off controller based on a temperature of the second inlet flow of gases as monitored by a core bleed line temperature sensor.

There may be a non-return valve disposed on the diversion line configured to prevent the second inlet flow of gases from flowing along the diversion line toward the air cycle line and/or the blower compressor.

It may be that the blower compressor is configured to be mechanically connected to the spool of the gas turbine engine via a variable transmission. It may be that the blower compressor is configured to be mechanically connected to the spool of the gas turbine engine via an electric variator.

The air pressurisation system may comprise a further catalyst material disposed along the bypass path.

The air pressurisation system may further comprise a controller configured to control the valve arrangement so as to maintain operation in the cooling mode when the air pressurisation system is operated in the augmented air supply mode.

It may be that the valve arrangement is configured to selectively provide the coolant to the heat exchanger for operation in the cooling mode.

It may be that: the first valve is configured to selectively restrict flow along the bypass path. The valve arrangement may be configured to actuate the first valve to vary a proportion of the conditioned air which flows along the cooling path and a proportion of the conditioned air which flows along the bypass path.

The delivery line may comprise a selective heat exchange module integrating the heat exchanger, the valve arrangement for selectively diverting conditioned air to the heat exchanger in the cooling mode, and the bypass path.

It may be that the selective heat exchange module has a nested arrangement in which one of the cooling path and the bypass path extends through the other of the cooling path and the bypass path.

Additionally, it may be that the valve arrangement is configured to selectively provide the coolant to the heat exchanger for operation in the cooling mode. The heat exchanger may have a coolant side and a compressed air side forming a portion of the delivery line.

The valve arrangement may be configured to selectively provide the coolant to the heat exchanger for operation in the cooling mode by actuating a coolant valve to control a flow rate of coolant through the heat exchanger.

The air pressurisation system may comprise a controller configured to receive a cooling signal relating to a temperature of the conditioned air provided by the delivery line, and the controller may be configured to control the valve arrangement to switch between operation in the baseline mode and the cooling mode based on the cooling signal.

It may be that air pressurisation system comprises: a temperature sensor configured to monitor a temperature of compressed air at an upstream monitoring location on the delivery line between the blower compressor and the heat exchanger. The air pressurisation system may further comprise a controller configured to control the valve arrangement to switch between operation in the baseline mode and the cooling mode based on the monitored temperature at the monitored location.

It may be that the controller is configured to control the valve arrangement so as to: switch from operation in the baseline mode to operation in the cooling mode in response to a determination that the temperature of the conditioned air at the upstream monitoring location is equal to or greater than an aftercooling temperature threshold, the aftercooling temperature threshold being between 200°C and 280°C.

As noted elsewhere herein, the present disclosure relates to a gas turbine engine. Such a gas turbine engine may comprise an engine core comprising a turbine, a combustor, a compressor, and a core shaft connecting the turbine to the compressor. Such a gas turbine engine may comprise a fan (having fan blades) located upstream of the engine core.

Arrangements of the present disclosure may be particularly, although not exclusively, beneficial for fans that are driven via a gearbox. Accordingly, the gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft, and not the second core shaft, in the example above). Alternatively, the gearbox may be arranged to be driven by any one or more shafts, for example the first and/or second shafts in the example above.

The gearbox may be a reduction gearbox (in that the output to the fan is a lower rotational rate than the input from the core shaft). Any type of gearbox may be used. For example, the gearbox may be a "planetary" or "star" gearbox, as described in more detail elsewhere herein.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other.

The skilled person will appreciate that except where mutually exclusive, any feature described herein may be combined with any other feature described herein, provided that these combinations fall within the scope of the invention as defined by the appended claims.

### BRIEF DESCRIPTION OF THE DRAWINGS

Embodiments will now be described by way of example only with reference to the accompanying drawings, which are purely schematic and not to scale, and in which:
**Figure 1** is a sectional side view of a gas turbine engine;
**Figure 2** is a close up sectional side view of an upstream portion of a gas turbine engine;
**Figure 3** is a partially cut-away view of a gearbox for a gas turbine engine;
**Figure 4** shows a first example air pressurisation system for supplying air to an airframe system, according to the invention;
**Figure 5** shows a second example air pressurisation system for supplying air to an airframe system, not falling within the scope of the claims;
**Figure 6** shows an example air cycle line suitable for use in the first example air pressurisation system of Figure 4 and/or the second example air pressurisation system of Figure 5;
**Figure 7** shows an example of a selective heat exchange module suitable for use in the first example air pressurisation system of Figure 4;
**Figure 8** shows a third example air pressurisation system for supplying air to an airframe system, according to the invention;
**Figure 9** shows a fourth example air pressurisation system for supplying air to an airframe system, not falling within the scope of the claims;
**Figure 10** shows a fifth example air pressurisation system for supplying air to an airframe system, not falling within the scope of the claims; and
**Figure 11** shows highly schematic diagram of an aircraft including an airframe, a gas turbine engine and an air pressurisation system.

### DETAILED DESCRIPTION

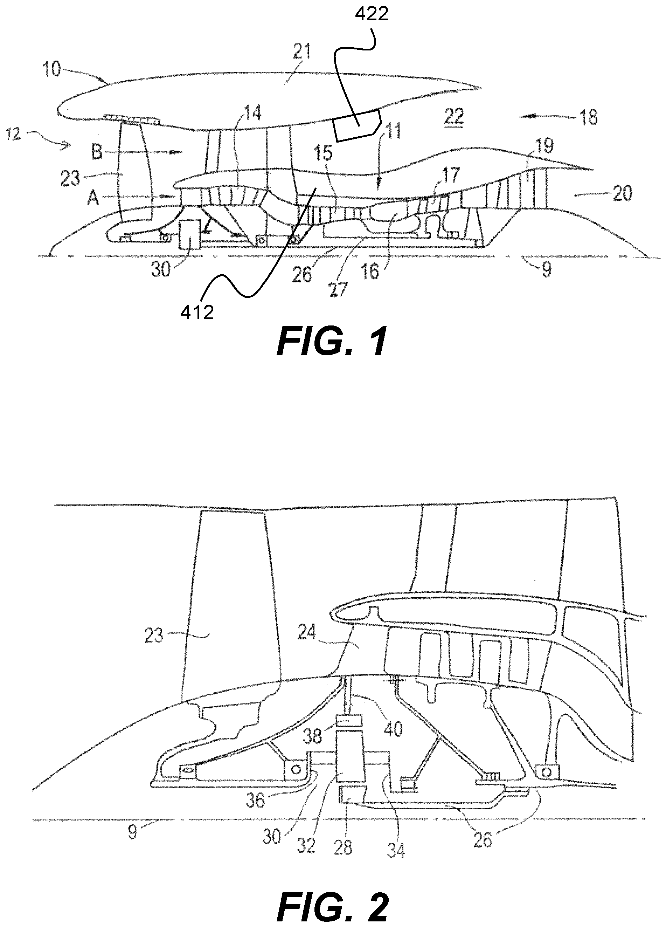

**Figure 1** illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The bypass duct 22 may comprise an engine bypass duct port 422 for supplying air from the bypass duct to an air pressurisation system or the like. The engine core 11 may also comprise an engine core port 412 for supplying air from a compressor stage of the engine core 11 (such as the low pressure compressor 14 or the high-pressure compressor 15) to an air pressurisation system or the like. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

An exemplary arrangement for a geared fan gas turbine engine 10 is shown in **Figure 2****.** The low pressure turbine 19 (see Figure 1) drives the shaft 26, which is coupled to a sun wheel, or sun gear, 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

Note that the terms "low pressure turbine" and "low pressure compressor" as used herein may be taken to mean the lowest pressure turbine stages and lowest pressure compressor stages (i.e., not including the fan 23) respectively and/or the turbine and compressor stages that are connected together by the interconnecting shaft 26 with the lowest rotational speed in the engine (i.e., not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

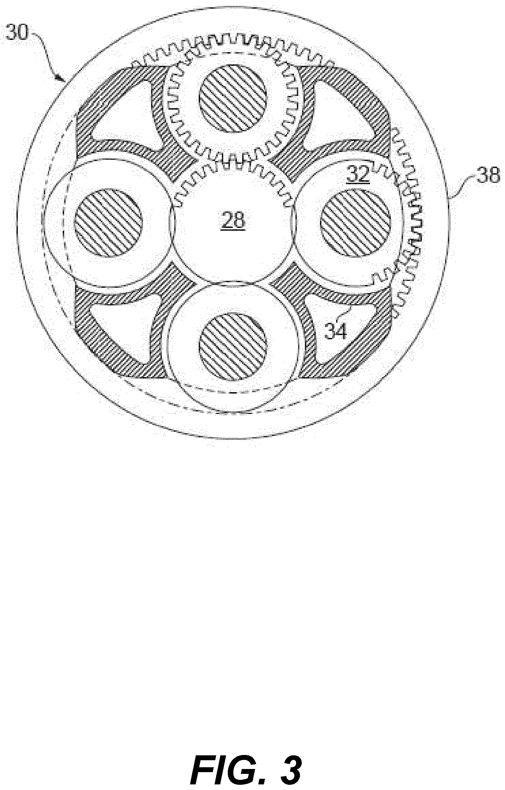

The epicyclic gearbox 30 is shown by way of example in greater detail in **Figure** 3. Each of the sun gear 28, planet gears 32 and ring gear 38 comprise teeth about their periphery to intermesh with the other gears. However, for clarity only exemplary portions of the teeth are illustrated in Figure 3. There are four planet gears 32 illustrated, although it will be apparent to the skilled reader that more or fewer planet gears 32 may be provided within the scope of the claimed invention. Practical applications of a planetary epicyclic gearbox 30 generally comprise at least three planet gears 32.

The epicyclic gearbox 30 illustrated by way of example in Figures 2 and 3 is of the planetary type, in that the planet carrier 34 is coupled to an output shaft via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in Figures 2 and 3 is by way of example only, and various alternatives are within the scope of the present disclosure. Purely by way of example, any suitable arrangement may be used for locating the gearbox 30 in the engine 10 and/or for connecting the gearbox 30 to the engine 10. By way of further example, the connections (such as the linkages 36, 40 in the Figure 2 example) between the gearbox 30 and other parts of the engine 10 (such as the input shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of Figure 2. For example, where the gearbox 30 has a star arrangement (described above), the skilled person would readily understand that the arrangement of output and support linkages and bearing locations would typically be different to that shown by way of example in Figure 2.

Accordingly, the present disclosure extends to a gas turbine engine having any arrangement of gearbox styles (for example star or planetary), support structures, input and output shaft arrangement, and bearing locations.

Optionally, the gearbox may drive additional and/or alternative components (e.g., the intermediate pressure compressor and/or a booster compressor).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 1 has a split flow nozzle 18, 20 meaning that the flow through the bypass duct 22 has its own nozzle 18 that is separate to and radially outside the core engine nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example. In some arrangements, the gas turbine engine 10 may not comprise a gearbox 30.

The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial and circumferential directions are mutually perpendicular.

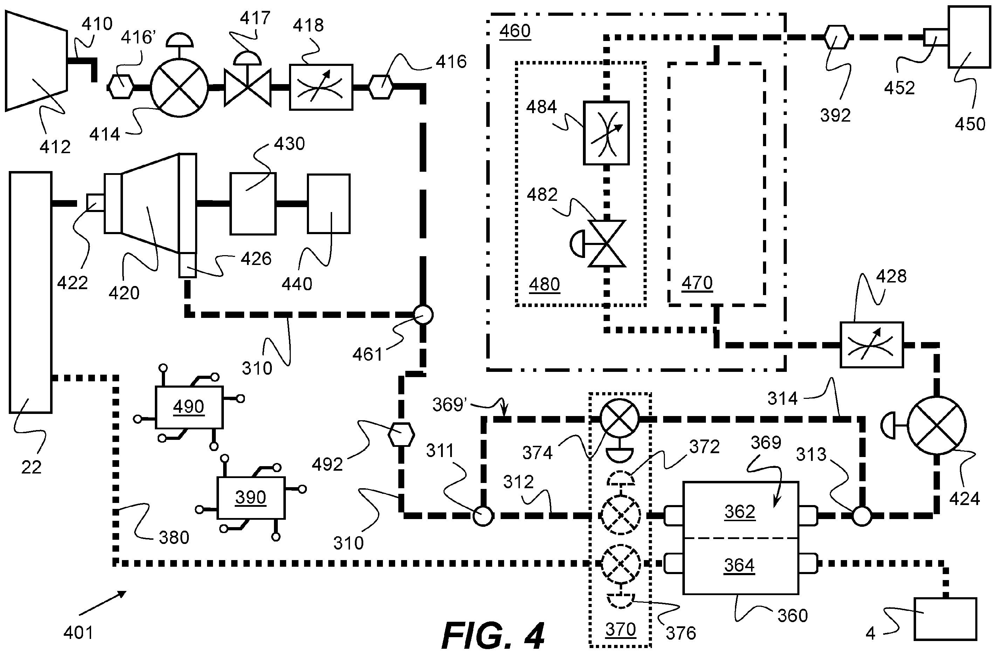

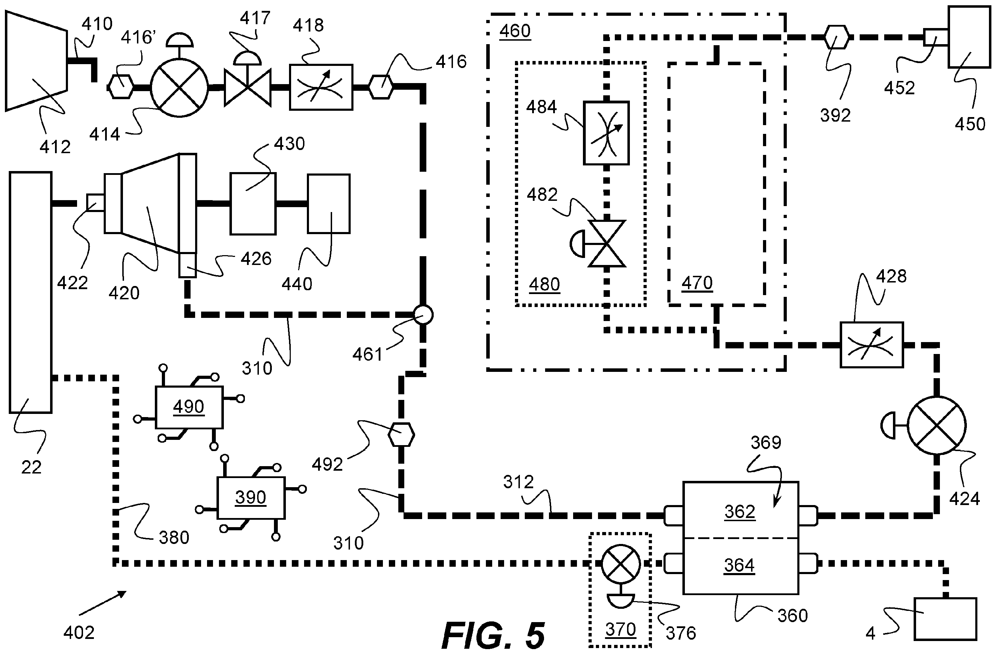

A first example air pressurisation system 401 for supplying air to an airframe system 450 is shown schematically in **Figure** 4. The air pressurisation system 401 comprises a blower compressor 420 configured to be mechanically coupled to a spool 440 of a gas turbine engine, such as the gas turbine engine 10. The expression "spool" is used herein to denote a shaft of the engine which interconnects a compressor and a turbine of the engine core, and/or engine components which rotate together with such an engine shaft (e.g., the compressor and turbine interconnected by the shaft, and associated rotating components such as drums and disks). In the example of Figures 4 and 5, the air pressurisation system 401 comprises a variable transmission 430 for mechanically coupling the blower compressor 420 to the spool 440.

The variable transmission 430 allows a rotational speed of the blower compressor 420 to be decoupled from a rotational speed of the spool 440, so that a performance of the air pressurisation system 401 is not solely governed by an operating speed of the gas turbine engine (e.g., it can be controlled to operate at a target speed independent of the rotational speed of the spool, and/or at a variable speed ratio relative to the rotational speed of the spool). Inclusion of a variable transmission 430 within the air pressurisation system 401 therefore provides more versatile and adaptable means for supplying pressurised air to an airframe system. Various suitable variable transmission types will be apparent to those of ordinary skill in the art. For example, the variable transmission 430 may comprise an electric variator, as described in EP 3517436 B1.

The blower compressor 420 is configured to operate in a blower mode in which the blower compressor 420 is driven to rotate by the spool 440 to draw a first inlet flow of gases from an engine bypass duct port 422 and to discharge compressed gases to a blower compressor discharge port 426 for supply to an airframe port 452 via an air treatment apparatus 460 for an airframe air use (i.e., a particular application or purpose for which the air is supplied to the airframe). Flows of gases referred to within the present specification, such as the first inlet flow of gases and the compressed gases discharged from the blower compressor may be, or be substantially comprised of, compressed air. Unless otherwise specified, the terms flows of gases and flows of air may be used interchangeably herein. It will be appreciated that when a flow of gases is referred to as a flow of air, then the flow may additionally comprise one or more other gases, e.g., contaminants, such as volatile organic compounds, burnt and unburnt hydrocarbons and/or any other contaminants present within the flow of air/gases.

A delivery line 310 extends from the blower compressor discharge port 426 to the airframe port 452. The airframe port 452 is in, or configured to be in, fluid communication with an airframe system 450. As described in further detail below, the delivery line 310 at least partially extends through the air treatment apparatus 460 and is configured to discharge air through the airframe port 452 for supply to the airframe system 450 for the airframe air use.

The airframe air use may be, for example, aircraft pressurisation or cargo bay smoke eradication. The blower compressor 420 is generally configured to compress the first inlet flow of air by converting kinetic energy of the first inlet flow of air into pressure energy and heat energy. The blower compressor 420 may be any suitable type of compressor. As shown in the examples of Figures 4 and 5, the blower compressor 420 may preferably be a centrifugal compressor.

The engine bypass duct port 422 is in fluid communication with a bypass duct 22 of the gas turbine engine. Accordingly, when operated in the blower mode, the blower compressor 420 is configured to receive the first inlet flow of air from the bypass duct 22 of the gas turbine engine. The blower compressor 420 is further configured to supply the first inlet flow of air to the airframe port 452 via the air treatment apparatus 460, for example to pressurise an aircraft cabin. The first inlet flow of air is conveyed from the blower compressor 420 to the air treatment apparatus 460 through the discharge line 310. The first inlet flow of air may be subject to over-pressure and/or over-temperature prevention and/or flow control prior to supply to the airframe port 452 and/or the air treatment apparatus 460. In the examples of Figures 4 and 5, the delivery line 310 comprises a blower compressor shut off valve (SOV) 424 and a blower compressor flow control valve (FCV) 428 for each of these purposes. The SOV 424 may be configured to close in response to the pressure and/or the temperature of the air conveyed by the delivery line being excessive, as described in further detail below.

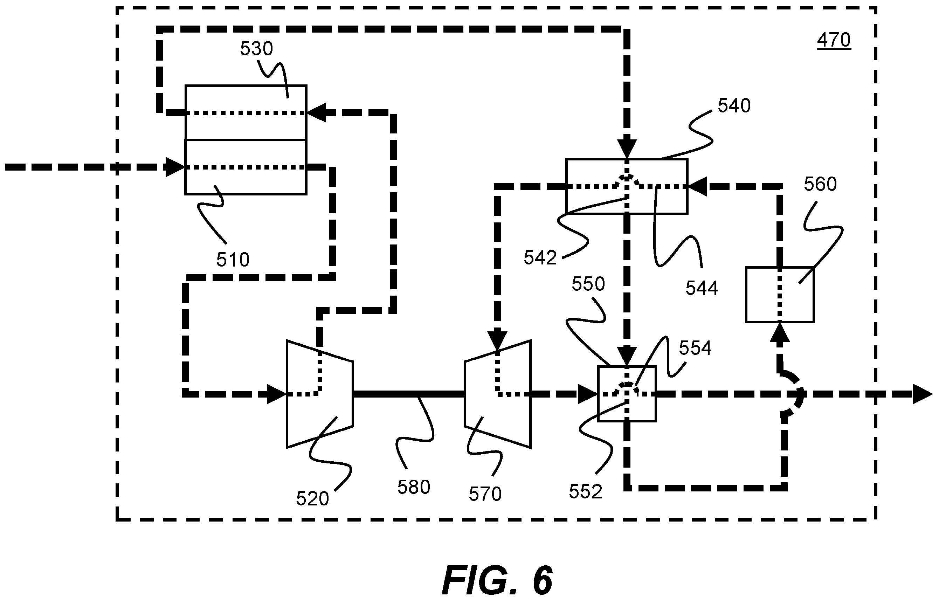

The air treatment apparatus 460 in turn comprises an air cycle line 470 and a diversion line 480, with the air cycle line 470 forming a part of the delivery line 310. The air cycle line 470 is configured to condition gases (e.g., air) received from the blower compressor 420, for example by cooling and/or dehumidifying air received from the blower compressor 420. In other words, a flow of gases through the air cycle line 470 is subject to active conditioning therein so as to change (e.g., reduce) a temperature, a pressure and/or a humidity of the flow of gases prior to supply to the airframe port 452. The air cycle line 470 may comprise, for instance, an air conditioning fan, an air conditioning compressor, an air conditioning turbine, one or more heat exchangers, a condenser, a water extractor and/or a reheater. An example internal configuration of the air cycle line 470 is described with respect to Figure 6 below.

The diversion line 480 is configured to bypass the air cycle line 470 such that air received from the blower compressor 420 and conveyed through the diversion line 480 is not subject to active conditioning therein prior to supply to the airframe port 452. For example, the flow of air through the diversion line may not be subject to heat exchange at a heat exchanger, or humidification/de-humidification. The first inlet flow of air drawn from the engine bypass duct port 422 by the blower compressor 420 is conveyed through either the air cycle line 470 or the diversion line 480 within the air treatment apparatus 460 prior to supply to the airframe port 452. The air treatment apparatus 460 is configured to mix air from the air cycle line 470 with air from the diversion line 480 prior to combining the flows for discharge into the delivery line 310, with the delivery line 310 being configured to convey the conditioned air received from the air treatment apparatus 460 to the airframe port 452. Accordingly, in use, the air treatment apparatus 460 conditions compressed air within the delivery line 310 for subsequent discharge through the airframe port 452 for supply to the airframe system 450. Such mixing may be controlled by a controller (such as the air supply mode controller 490 described below) based on a monitored temperature of the combined flow for discharge to the airframe system 450, for example based on an output of a temperature sensor monitoring the combined flow (e.g., a downstream temperature sensor 392 or an upstream temperature sensor 492 as shown in Figure 4).

In the example of Figures 4 and 5, the diversion line 480 comprises a diversion line pressure regulating valve (PRV) 482 and a diversion line flow control valve (FCV) 484. The diversion line PRV 482 is configured to regulate a pressure of gases (e.g., air) in the diversion line 480 prior to mixing with gases (e.g., air) from the air cycle line 470 for supply to the airframe port 452, to prevent supply of gases (e.g., air) at an excessively high pressure. The diversion line PRV 482 is configured to ensure that the pressure of air in the diversion line 480 downstream of the diversion line PRV 482 is no greater than an air supply pressure threshold associated with the airframe system 450. The air supply pressure threshold of the airframe system 450 may be dependent on by the airframe air use for which air is supplied to the airframe system. For instance, when the air pressurisation system 401 is required to supply air to the airframe port 452 for a cabin pressurisation purpose, the airframe system 450 may supply air directly to a cabin of an aircraft. If so, the air supply pressure threshold of the airframe system may be approximately 1 atm or approximately 1 bar (approximately 100 kPa). Accordingly, the diversion line PRV 482 may be configured to ensure that the pressure of air in the diversion line 480 downstream of the diversion line PRV 482 is no more than approximately 1 atm or approximately 1 bar (approximately 100kPa).

The diversion line FCV 484 is configured to control a flow rate (e.g., a mass-flow rate or a volumetric flow rate) of air in the diversion line 480. The air treatment apparatus 460 (for example, a controller of the air treatment apparatus 460) is configured to actuate the diversion line FCV 484 so as to control the flow rate of air in the diversion line 480 which is subsequently mixed with air from the air cycle line 470, to target a temperature of the combined flow for discharge to the airframe system 450. When the diversion line FCV 484 is in a fully closed state, no air flows through the diversion line 480 such that all of the first inlet flow of air drawn from the engine bypass duct port 422 by the blower compressor 420 is conveyed through the air cycle line 470. When the diversion line FCV 484 is in a fully open state, a maximum fraction of the first inlet flow of air drawn from the engine bypass duct port 422 by the blower compressor 420 is conveyed through the diversion line 480 and a remaining fraction of the first inlet flow of air drawn from the engine bypass duct port 422 is conveyed through the air cycle line 470.

The diversion line FCV 484 may be actuated through a plurality of intermediate states between the fully closed state and the fully open state to control a fraction of the first inlet flow of air being conveyed through the diversion line 480 (and thereby also to control a fraction of the first inlet flow of air being conveyed through the air cycle line 470).

The airframe system 450 may be configured or rated to receive an air supply which has a temperature that is greater than a lower airframe system air temperature threshold and/or lower than an upper airframe system air temperature threshold. The respective airframe system air temperature thresholds may be dictated by, for example, a temperature demand of the airframe system 450 for a cabin pressurisation purpose (as may be specified by a cabin climate controller), or by safe operating temperatures for components which convey the air flow. The lower airframe system air temperature threshold may be, for example, at least 10°C or 0°C, and the upper airframe system air temperature threshold may be, for example, at least 260°C, 240° or 200°C. It may be that there are different thresholds that can be permitted for different durations. For example, there may be a short-duration transient threshold of at least 260°C (e.g., permitted for no more than 5 seconds), and a steady state threshold of at least 200°C.

In typical use, air from the air cycle line 470 has a lower temperature than air from the diversion line 480. In particular, it may be that a temperature of air from the air cycle line 470 prior to mixing with air from the diversion line 480 is below the lower airframe system air temperature threshold. In contrast, it may be that a temperature of air from the diversion line 480 prior to mixing with air from the air cycle line 470 is greater than 200°C.

Because the air treatment apparatus 460 mixes air from the air cycle line 470 with air from the diversion line 480 prior to discharge to the airframe system 450 through the airframe port 452, a temperature of air supplied to the airframe system 450 is a function of the temperature and the flow rate (e.g., the mass flow rate) of air received from the air cycle line 470 and the temperature and the flow rate (e.g., the mass flow rate) of air received from the diversion line 480. As discussed above, the air treatment apparatus 460 is configured to mix air from the air cycle line 470 with air from the diversion line 480 to control the temperature of air for discharged from the air treatment apparatus 460 by controlling the diversion line flow control valve 484.

In the examples depicted in Figures 4 and 5, the air pressurisation system 401 further comprises a core bleed line 410 configured to provide a second inlet flow of gases from a compressor 412 of a core of the gas turbine engine to the delivery line 310 in an augmented air supply mode of the air pressurisation system 401. Like the first inlet flow of gases, the second inlet flow of gases may comprise, or be substantially comprised of, a second inlet flow of air. The core bleed line 410 comprises a core bleed control valve 414. In this example, the core bleed control valve 414 is a solenoid actuated pressure-regulating valve. However, in other examples the core bleed control valve 414 may be otherwise actuated.

The second inlet flow of air does not pass through the blower compressor 420 prior to being provided to the delivery line 310 by the engine core bleed line 410, nor is it subject to any further active compression process prior to being supplied to the delivery line 310. In some examples, the second inlet flow of air does not pass through a precooler device prior to being provided to the delivery line 310 by the engine core bleed line 410. The second inlet flow of air may not be subject to any other kind of active cooling process (i.e., through a dedicated heat exchanger) prior to being supplied to the delivery line 310.

In an unaugmented air supply mode of the air pressurisation system 401, in which a flow demand of the airframe system 450 is met by the first inlet air flow through the cabin blower, the core bleed control valve 414 is fully closed which prevents air being conveyed through the engine core bleed line 410. Accordingly, in the unaugmented air supply mode, the second inlet flow of air from the compressor 412 is not provided to the delivery line 310, and the air treatment apparatus 460 (and therefore the airframe system 450) is supplied exclusively with the first inlet flow of air drawn from the bypass duct 22 of the gas turbine engine by the blower compressor 420.

The airframe system 450 is associated with a flow demand for air (e.g., a mass-flow rate demand). The flow demand of the airframe system 450 may be dictated by the airframe air use for which air is supplied to the airframe system. Under certain operating conditions, a flow delivery capacity of the air pressurisation system 401 may not be sufficient to meet the flow demand of the airframe system 450 in the unaugmented air supply mode.

The air pressurisation system 401 further comprises an air supply mode controller 490. The air supply mode controller 490 is configured to control the core bleed control valve 414 and thereby selectively operate the air pressurisation system 401 in the augmented air supply mode in which the core bleed control valve 414 is open and in the unaugmented air supply mode in which the core bleed control valve 414 is closed. The air supply mode controller 490 may be configured to receive a flow demand signal which corresponds to the flow demand of the airframe system 450. The flow demand signal may be received from, for example, the airframe system 450.

The air supply mode controller 490 may be configured to determine whether a flow delivery capacity of the air pressurisation system 401 is sufficient to meet the flow demand of the airframe system 450 when the air pressurisation system is in the unaugmented mode. If the air supply mode controller 490 determines that the flow delivery capacity of the air pressurisation system 401 is insufficient to meet the flow demand of the airframe system 450 when the air pressurisation system 401 is in the unaugmented air supply mode, the air supply mode controller 490 switches the air pressurisation system 401 into the augmented air supply mode by opening the core bleed control valve 414.

Conversely, if the air supply mode controller 490 determines that the flow delivery capacity of the air pressurisation system 401 is sufficient to meet the flow demand of the airframe system 450 when the air pressurisation system 401 is in the unaugmented air supply mode, the air supply mode controller 490 switches the air pressurisation system 401 into the unaugmented air supply mode by closing the core bleed control valve 414.

In the augmented air supply mode, the second inlet flow of air is provided to the delivery line 310 which is mixed with the first inlet flow of air prior to discharge through the airframe port 452. As a result, a flow rate of the second inlet flow of air augments or supplements a flow rate of the first inlet flow of air in the augmented air supply mode to provide a total flow rate provided to the airframe port 452 by the delivery line 310 (e.g., a total mass-flow rate).

In various examples, the flow delivery capacity of the air pressurisation system 401 may be predicted using a flow delivery capacity model. The flow delivery capacity model may be configured to predict the flow delivery capacity of the air pressurisation system in the unaugmented mode based on at least one parameter on which the flow delivery capacity of the air pressurisation system 401 depends. The at least one parameter is selected from a group consisting of: a rotational speed of the spool of the gas turbine engine, a rotational speed of the blower compressor, a pressure of a flow though the bypass duct of the gas turbine engine, a temperature of the flow through the bypass duct of gas turbine engine, an altitude of the gas turbine engine and/or an airspeed of the gas turbine engine.

The rotational speed of the spool of the gas turbine engine, the rotational speed of the blower compressor, the pressure of the flow though the bypass duct of the gas turbine engine, and/or the temperature of the flow through the bypass duct of gas turbine engine may be monitored using sensors of the gas turbine engine. The pressure of the flow through the bypass duct of the gas turbine engine may be monitored at a location, for example, downstream of a propulsive fan of the gas turbine engine and upstream of the bypass duct port 422. The altitude of the gas turbine engine and/or the airspeed of the gas turbine engine may be monitored parameters which are monitored by dedicated respective sensors which are provided to the gas turbine engine. Otherwise, the altitude of the gas turbine engine and/or the airspeed of the gas turbine engine may be determined by the air supply mode controller 490 based on respective signals received from the airframe system 450.

In some examples, the flow delivery capacity of the air pressurisation system 401 may be directly monitored using a flow rate sensor in the air pressurisation system or in the airframe system 450, to monitor an actual flow rate of air delivered in the unaugmented mode. For example, the flow delivery capacity may be monitored using a flow rate sensor located at the same position as the downstream temperature sensor 392 or the upstream temperature sensor 492, as shown in the example of Figure 4.

In the example of Figure 4, the engine core bleed line 410 is configured to mix the second inlet flow of air with the first inlet flow of air from the blower compressor 420 at a mixing point 461 located on the delivery line 310 upstream of a bifurcation between the air cycle line 470 and the diversion line 480 (and, preferably, upstream of the air treatment apparatus 460, as shown in Figure 5). Accordingly, in this example, a non-return valve is not provided within the diversion line 480. However, the second inlet flow of air may be subject to over-pressure regulation prior to mixing with the first inlet flow of air. For these purposes, in the example of Figure 5, the engine core bleed line 410 further comprises a core bleed line PRV 417. The engine core bleed line PRV 417 is configured to regulate a pressure of air in the engine core bleed line 410 (i.e., the second inlet flow of air) prior to mixing with air at the location upstream of the diversion line 480, for example to the air supply pressure threshold as described above. The mixed flow of air which is the result of mixing the first inlet flow of air and the second inlet flow of air is then split between the air cycle line 470 and the diversion line 480 according to the operation of the air treatment apparatus 460.

The air pressurisation system 401 may further comprise a core bleed line temperature sensor 416. The core bleed line temperature sensor 416 is configured to monitor a temperature of the second inlet flow of air. In the example of Figure 4, the core bleed line temperature sensor 416 is shown at a location on the engine core bleed line 410 downstream of the core bleed line control valve 414. However, it will be appreciated that the core bleed line temperature sensor 416 may be positioned at any suitable location within the air pressurisation system 401 so as to generate a signal indicative of the temperature of the second inlet flow of air.

The air supply mode controller 490 or a dedicated temperature shut-off controller (not shown) may be configured to determine whether the temperature of the second inlet flow of air is excessive. Such a temperature shut-off controller may be located in the gas turbine engine. The temperature of the second inlet flow of air may be determined to be excessive, for example, when the temperature of the second inlet flow of air exceeds a tolerance limit of a structure through which the core bleed line 410 passes, such as an internal airframe duct. In response to a positive determination that the temperature of second inlet flow of air is excessive, the air supply mode controller 490 or dedicated temperature shut-off controller is configured to prevent supply of the second inlet flow of air to the delivery line 310.

In the example of Figure 4, the air supply mode controller 490 or dedicated temperature shut-off controller is configured to restrict the supply of the second inlet flow of air by closing the core bleed line control valve 414, which may be a pressure regulating and shut-off valve (PRSOV). However, in other examples, the temperature shut-off controller or the air supply mode controller 490 may prevent supply of the second inlet flow of air to the delivery line 310 by other means, for example by using a dedicated shut-off valve disposed on the engine core bleed line 410.

The core bleed line control valve 414 may comprise a passive and reversible thermal shut-off arrangement. The passive and reversible thermal shut-off arrangement may comprise, for example, a eutectic link. In such examples, the air supply mode controller 490 and temperature sensor 416 may still be configured to provide shut-off control (e.g., as a redundant system), or otherwise the air supply mode controller 490 may not be configured to determine whether the temperature of the second inlet flow is excessive and there may be no core bleed line temperature sensor 416, but rather the passive thermal shut-off arrangement provided to the core bleed line control valve 414 is relied upon to prevent supply of the second inlet flow of air to the delivery line 310 when the temperature of the second inlet flow of air is excessive.

The SOV 424 is generally configured to prevent supply of compressed air to the airframe port 452 at an excessive pressure and/or an excessive temperature. To this end, the SOV 424 may be provided with means to monitor the pressure and/or the temperature of gases conveyed by the delivery line 310 and may be configured to close in response to a determination that the pressure of gases conveyed by the delivery line 310 exceeds an SOV pressure threshold (e.g., the air supply pressure threshold discussed above) and/or in response to a determination that the temperature of gases conveyed by the delivery line 310 exceeds a SOV temperature threshold (e.g., the upper airframe system air temperature threshold discussed above). Additionally or alternatively, the SOV 424 may be configured to close in response to receipt of a signal from a controller or a sensor indicative of the pressure and/or the temperature of gases within the delivery line 310 being excessive (e.g., exceeding the SOV pressure threshold and/or the SOV temperature threshold).

The air pressurisation system 401 further comprises a heat exchanger 360 configured to transfer heat from the compressed air conveyed by the delivery line 310 to a coolant. In the specific example of Figure 4, the heat exchanger 360 is located upstream of the air treatment apparatus 460, such that the heat exchanger 360 is configured to receive compressed air from the blower compressor 420 for heat exchange with the coolant and to discharge the compressed air to the airframe port via the air treatment apparatus 460 (i.e., via the delivery line 310) for supply to the airframe system 450.

In the example shown in Figure 4, the delivery line 310 comprises a cooling path 312 and a bypass path 314. The cooling path 312 extends through the heat exchanger 360 such that conditioned and compressed air which flows through the cooling path 312 passes through the heat exchanger 360 for heat exchange with the coolant, while the bypass path 314 bypasses the heat exchanger 360 such that compressed air which flows through the bypass path 314 does not pass through the heat exchanger 360. The cooling path 312 and the bypass path 314 extend between an upstream junction 311 and a downstream junction 313 (the junctions being junctions of the respective paths). The heat exchanger 360 has a compressed air side 362 which forms a portion of the delivery line 310 extending through the heat exchanger 360 (i.e., forms a portion of the cooling path 312). The heat exchanger 360 also has a coolant side 364 configured to receive a coolant for heat exchange with compressed air in the compressed air side 362. A coolant line 380 extends through the coolant side 364 of the heat exchanger 360 such that the heat exchanger 360 is configured to receive coolant via the coolant line 380.

The air pressurisation system 401 further comprises a valve arrangement 370 configured to switch the air pressurisation system 401 between operation in a baseline mode and a cooling mode, as described in further detail below. In the example of Figure 4, the valve arrangement 370 comprises a valve configured to control a flow rate of compressed air through the cooling path 312. According to the disclosure, such a valve may be disposed on the cooling path 312 or the bypass path 314 and may be disposed at either, or between, the upstream junction 311 and the downstream junction 313.

In the example of Figure 4, a valve 374 is disposed on the bypass path 314 such that the valve 374 is configured to selectively restrict flow along the bypass path 314. The valve arrangement 370 is configured to actuate the valve 374 to vary a proportion of the compressed air which flows along the cooling path 312 (and therefore through the compressed air side 362 of the heat exchanger 360) and a corresponding proportion of the compressed air which flows along the bypass path 314. The valve 374 may be operable in at least an open state in which it permits flow along the bypass path 314 and a closed state in which it prevents flow along the bypass path 314. The valve 374 may be operable between a plurality of open states at which flow along the bypass path 314 is restricted to a varying degree.

In the specific example of Figure 4, the valve 374 is a first valve 374 of the valve arrangement, and the valve arrangement further comprises a second valve 372 disposed on the cooling path 312 such that the second valve 372 is configured to selectively restrict flow along the cooling path 312. In this specific example, the valve arrangement 370 is configured to actuate both the first valve 374 and the second valve 372 to vary a proportion of the compressed air conveyed by the delivery line 310 which flows along the cooling path 312 and a proportion of the compressed air conveyed by the delivery line 310 which flows along the bypass path 314. The second valve 372 is operable in at least an open state in which it permits flow along the cooling path 312 and a closed state in which it prevents flow along the cooling path 312. The second valve 372 may be operable between a plurality of open states at which flow along the cooling path 414 is restricted to a varying degree. However, it will be appreciated that in variant examples, the valve arrangement 370 may not comprise the second valve 372. In particular, it may be that with any respective valve in a fully open state (or absent any such valve), a flow coefficient of the bypass path is greater than a flow coefficient of the cooling path, such that in use flow preferentially flows down the bypass path. Consequently, adequate control to divert flow between the bypass and cooling paths may be provided solely by a valve provided on the bypass path.

In the specific example of Figure 4, the valve arrangement 370 comprises a coolant valve 376 disposed on the coolant line 380 and configured to control a flow rate of coolant through the coolant side 364 of the heat exchanger 360 by selectively restricting flow of coolant to the heat exchanger 360 via the coolant line 380. It will be understood that the coolant valve 376 may be disposed on either side of (i.e., upstream of or downstream of) the coolant side 364 of the heat exchanger. The coolant valve 376 is operable in at least an open state in which it permits flow to the coolant side 364 of the heat exchanger 360, and a closed state in which it prevents coolant flow to the coolant side 364 of the heat exchanger 360.

Generally, a coolant side of a heat exchanger as envisaged in the present disclosure may be configured to receive coolant comprising, for example, air, combustible fuel, oil, lubricant fluid, water, glycol, hydraulic fluid and/or refrigerant fluid. The coolant side 364 of the heat exchanger 360 in the example of Figure 4 is configured to receive coolant from the bypass duct 22 of the gas turbine engine 10 via the coolant line 380, such that air received from the bypass duct constitutes the coolant. As shown in the example of Figure 4, the heat exchanger 360 is be configured to discharge coolant to an external environment 4. In examples in which air received from the bypass duct 22 constitutes the coolant, the heat exchanger 360 may be configured to discharge coolant to the external environment 4 via the bypass duct 22 at a bypass duct outlet, the bypass duct outlet being located downstream of the bypass duct inlet within the bypass duct 22. In other examples in which air received from the bypass duct 22 constitutes the coolant, the heat exchanger 360 may be configured to discharge coolant to the external environment 4 elsewhere, for example at a core terminus outlet, the core terminus outlet being located at or in proximity to a core nozzle 20 of the gas turbine engine.

The air pressurisation system 401 further comprises an aftercooling controller 390 configured to control the valve arrangement 370 to switch between operation of the air pressurisation system 401 in the baseline mode and the cooling mode as will be described in further detail below.

A second example air pressurisation system 402 for supplying air to an airframe system 450, this example not falling within the scope of the claims, is shown schematically in **Figure 5****.** The second example air pressurisation system 402 shown in Figure 5 is similar to the air pressurisation system 401 shown in Figure 4, with like reference numerals being used to indicate common features.

In contrast to the first example air pressurisation system 401, the second example air pressurisation system 402 does not comprise a bypass path 314, an upstream junction 311, a downstream junction 313, a first valve 374 or a second valve 372. Accordingly, in the second example air pressurisation system 402, the valve arrangement 370 comprises only a valve 376 (which corresponds to the third valve 376 described above with respect to the second example air pressurisation system 401).

In use, the second inlet flow of air may be passively cooled within the core bleed line 410 between the compressor 412 and the delivery line 310. In particular, it may be that the engine core bleed line 410 extends along a significant length before providing the second inlet flow of air to the delivery line 310. Accordingly, a temperature of the second inlet flow of air at a location upstream of the core bleed control valve 414 may be higher than a temperature of the second inlet flow of air at a location downstream of the core bleed control valve 414. In both the examples of Figure 4 and 5, the core bleed line temperature sensor 416 may alternatively be located upstream of the core bleed control valve 414 (shown at reference numeral 416') so as to protect the core bleed control valve 414 from adverse effects associated with an excessive temperature of the second inlet flow of air.

In use, it may be that the blower compressor 420 is sized to draw a significant volume of air from the engine bypass duct 22 according to predicted demand. For example, under certain operating conditions in which the gas turbine engine is operating at a relatively low power and where the flow demand of the aircraft system 450 is relatively high, the blower compressor 420 may be required to draw and compress a large volume of air through the engine bypass duct port 422 for supply to the airframe port 452 through the delivery line 310. However, under such operating conditions, an ambient pressure of air within the engine bypass duct 22 may be relatively low and so the blower compressor 420 would have to operate at a relatively high speed in order to meet the flow demand of the airframe system 450. Accordingly, if the system were to only operate in the unaugmented mode, the blower compressor 420 would have to be sized in order to adequately meet a peak demand of the airframe system throughout an operating map of operating conditions for use, or an operating envelope of the airframe system may be curtailed.

Both the first example air pressurisation system 401 and the second example air pressurisation system 402 allow the air from the first inlet flow of air to be combined with air from the second inlet flow of air for supply to the airframe port 452 in the augmented air supply mode. According, the air pressurisation system 401, 402 allows the first inlet flow of air from the bypass duct 22 to be augmented or supplemented with the second inlet flow of air from the core of the gas turbine engine in the augmented air supply mode. As a result, the blower compressor 420 may not be required to draw and compress such a large volume of air through the engine bypass duct port 422 in the augmented air supply mode. Therefore, the blower compressor 420 may have a smaller size than would otherwise be required to meet a peak flow demand of the airframe system 450 for the same operating map of operating conditions. The smaller size of the blower compressor 420 may reduce a weight of the air pressurisation system 401, 402 and improve ease of installation within an aircraft and/or a gas turbine engine.

In addition, both the example air pressurisation systems described with respect to Figures 4 and 5 provide these advantages without the need for active cooling apparatus to be provided on, for example, the engine core bleed line 410. Active cooling apparatus is associated with additional complexity, size and weight of an air pressurisation system, and the example air pressurisation systems 401, 402 described above provide further technical advantages in that such apparatus need not be included.

According to the present disclosure, the air pressurisation systems 401, 402 comprise a catalyst material 369 disposed within the delivery line 310. For example, the catalyst material 369 may be disposed on the delivery line 310 between the blower compressor 420 and the SOV 424. The catalyst material 369 is configured to catalyse a reaction, e.g., an oxidation reaction, of volatile organic compounds (e.g., hydrocarbons) within the gases conveyed by the delivery line 310 in use. Specifically, in the example of Figures 4 and 5, the catalyst material 369 is disposed within the compressed air side 362 of the heat exchanger 360, such that the catalyst material is configured to catalyse a reaction, e.g., an oxidation reaction, of volatile organic compounds (e.g., hydrocarbons) within the compressed air which is conveyed by the delivery line 310. The catalyst material may catalyse a reaction by which volatile organic compounds are removed from the compressed air passing through the cooling path 312 by promoting a reaction of volatile organic compounds in the compressed air passing through the heat exchanger 360. In particular, the catalysed reaction may remove (that is, removal by chemical conversion) hydrocarbons from the compressed air passing through the cooling path 312 by promoting oxidation of hydrocarbons in the compressed air passing through the compressed air side 362 of the heat exchanger 360.

Materials suitable for use as the catalyst material 369 in the air pressurisation system 401, 402 in accordance with the purposes described above will be apparent to those skilled in the art. However, the catalyst material 369 may preferably include copper (e.g., copper oxide), vanadium (e.g., vanadium oxide), platinum, palladium, rhodium, cerium, iron, manganese and/or nickel. The catalyst material 369 may be supported on a substrate arranged in the delivery line 310, e.g., within the heat exchanger 360, such as ceramic substate, e.g., an alumina substrate.

During operation of the air pressurisation system 401, 402, there may be a risk of volatile organic compounds such as hydrocarbons being present within the compressed air conveyed by the delivery line 310. In particular, during typical operation of the air pressurisation system 401, 402 in the augmented air supply mode, there may be an elevated risk of volatile organic compounds such as hydrocarbons being present within the compressed air conveyed by the delivery line 310 as a result of migration from the core 11 (e.g., the compressor 412) of the gas turbine engine 10 through the core bleed line 410 into the delivery line 310.

The presence of the catalyst material 369 within the delivery line 310 (and in particular, the heat exchanger 360) enables volatile organic compounds within the compressed air, conveyed by the delivery line 310, to be at least partially removed (e.g., chemically converted) prior to discharge to the airframe system 450 through the airframe port 452, thereby reducing a risk of volatile organic compounds remaining in the air provided to the airframe system 450 through the airframe port by the delivery line 310.

As will be understood by those skilled in the art, because the second inlet flow of air is received into the engine core bleed line 410 from the core 11 of the gas turbine engine 10 (e.g., from the compressor 412), the temperature of the second inlet flow of air is typically greater than a temperature of the first inlet flow of air. As a result, mixing of the second inlet flow of air with the first inlet flow of air relatively increases a temperature of air conveyed by the delivery line 310 in the augmented air supply mode compared to the temperature of air conveyed by the delivery line 310 in the unaugmented air supply mode.

As will be appreciated by those skilled in the art, a catalytic performance of the catalyst material 369 may be dependent on the temperature of the air within the delivery line 310 (e.g., compared to a light-off temperature of the catalyst material 369). Because the temperature of the air conveyed by the delivery line 310 may be in excess of 150°C (and may optionally be in excess of 200°C, in excess of 300°C, in excess of 350°C or in excess of 400°C, especially if the catalyst material 369 is disposed upstream of the SOV 424), the catalytic performance of the catalyst material 369 may be promoted. In particular, when the air pressurisation apparatus 401 is operated in the augmented air supply mode the air conveyed by the delivery line 310 may usually be in excess of 150°C (and may optionally be in excess of 200°C, in excess of 300°C, in excess of 350°C or in excess of 400°C). An improved catalytic performance of the catalyst material 369 is associated with a larger fraction of volatile organic compounds (e.g., hydrocarbons) being removed from the compressed air supplied to the airframe system 450 for the airframe pressurisation purpose.

Further, if the air pressurisation system 401 comprises the bypass path 314, as described above with respect to Figure 4, the aftercooling controller 390 may be configured to maintain operation of the air pressurisation system 401 in the cooling mode when (i.e., whenever) the air pressurisation system 401 is operated in the augmented air supply mode (e.g., by the air supply mode controller 490) and so there may be an especially elevated risk of volatile organic compounds being present within the air conveyed by the delivery line 310. If so, air received from the compressor 412 of the gas turbine engine 10 via the core bleed line 410 is always supplied to the compressed air side 362 of the heat exchanger 360 for catalysis in the presence of the catalyst material 369 disposed therein.

Alternatively, if the air pressurisation system 401 comprises the bypass path 314, it may be that a further catalyst material 369' is disposed along the bypass path 314. The further catalyst material 369' is configured to perform a similar function to the catalyst material 369 described above, and hence may include copper (e.g., copper oxide), vanadium (e.g., vanadium oxide), platinum, palladium, rhodium, cerium, iron, manganese and/or nickel. If so, air received from the compressor 412 of the gas turbine engine 10 via the core bleed line 410 is always supplied to the airframe port 452 after having been subject to treatment by a catalyst material 369, 369' irrespective of whether the air pressurisation system 401 is operated in the cooling mode or in the baseline mode. Therefore, the aftercooling controller 390 is free to select whether to operate the air pressurisation system 401 in either the cooling mode or the baseline mode based on, for instance, the cooling signal.

Although the catalyst material 369 is disposed within the heat exchanger 360 in each of the first example air pressurisation system 401 and the second example air pressurisation system 402, it will be appreciated that the catalyst material 369 may be disposed elsewhere in accordance with the present disclosure. For instance, the catalyst material 369 may be disposed along the cooling path 312 in addition to, or instead of, being disposed within the heat exchanger 360. The catalyst material 369 may be disposed along the delivery line 310 between the blower compressor 420 and the airframe port 452 (e.g., between the mixing point 461 and the airframe port 452). For example, the catalyst material 369 may be disposed along the cooling path 312 upstream of the heat exchanger 360 (that is, between the upstream junction 311 and the heat exchanger 360) and/or downstream of the heat exchanger 360 (that is, between the heat exchanger 360 and the downstream junction 313).

Compared to previously-considered air pressurisation systems and/or previously considered aircraft, the example air pressurisation systems in accordance with the present disclosure provide that a larger fraction of volatile organic compounds (e.g., hydrocarbons) may be reliably removed from compressed air prior to supply to an airframe system. In particular, an air quality in an aircraft cabin pressurised with air from an air pressurisation system may be improved by use of an air pressurisation system in accordance with the present disclosure. The air quality of the aircraft cabin may be defined according to a concentration of volatile organic compounds within the air used to pressurise the aircraft cabin. Improved air quality in the aircraft cabin may be associated with reduced odour levels within the aircraft cabin. In addition or instead, providing an air pressurisation system in accordance with the present disclosure may enable a conventional device for the removal of volatile organic compounds (e.g., a hydrocarbon catalyser in an ozone converter) from the air supplied to the aircraft cabin to be eliminated, thereby reducing a complexity and/or a weight of an airframe to which the air pressurisation system 401, 402 is provided.

Moreover, the catalyst material 369 being disposed within the heat exchanger 360 enables the catalyst material 369 to be easily regenerated and/or recoated (e.g., old catalyst material stripped and new catalyst material 369 reapplied) at a maintenance interval (e.g., an overhaul) of a gas turbine engine 10 and thereby allows the catalytic performance of the catalyst material 369 to be easily maintained at an appropriate level throughout a lifetime of the airframe system 450.

Further, if the air pressurisation system 401, 402 comprises a bypass line 314 as described above, air within the delivery line 310 may only be provided to the compressed air side 362 of the heat exchanger 360 when operated in the cooling mode. Accordingly, an operational time in which the catalyst material 369 is subject to a flow of air may be relatively reduced, which is associated with a reduced rate of degradation of the catalytic performance of the catalyst material 369 and therefore an extended life of the catalyst material 369. In particular, it may be that the air pressurisation system 401 is operated in the baseline mode (and the unaugmented air supply mode) for a majority of an operational time, and so the life of the catalyst material 369 may be further extended.

**Figure** 6 shows an example air cycle line 470 suitable for use in the first example air pressurisation system 401 of Figure 4 and/or the second example air pressurisation system 401 of Figure 5. The example air cycle line 470 comprises a sequential fluid pathway for a flow of air provided to the air cycle line 470 through a first heat exchanger 510, an air conditioning compressor 520, a second heat exchanger 530, a first channel 542 of a reheater 540, a first channel 552 of a condenser 550, a water extractor 560, a second channel 544 of the reheater 540, an air conditioning turbine 570 and a second channel 554 of the condenser 550. The air conditioning turbine 570 is mechanically connected to the air conditioning compressor 520 by a shaft 580 (i.e., in a bootstrap arrangement, such that the shaft 580 may be referred to as a bootstrap shaft). In the example of Figure 6, the air cycle line 470 comprises a plurality of heat exchangers (that is, the first heat exchanger 510 and the second heat exchanger 530). However, it will be appreciated that in other examples, the air cycle line 470 may comprise only a single heat exchanger (that is, either the first heat exchanger 510 or the second heat exchanger 530).

In use, the flow of air provided to the air cycle line 470 is first drawn through the first heat exchanger 510 and subsequently provided to the air conditioning compressor 520. Heat is rejected from the flow of air within the first heat exchanger 510, such that the flow of air is cooled therein. The first heat exchanger 510 may reject heat to ambient air, for example, in which case the first heat exchanger may be referred to as a first air-to-air heat exchanger. In particular, the first heat exchanger 510 may be at least partially disposed within a ram air duct of an aircraft, such that the first heat exchanger 510 rejects heat to ambient air drawn through the ram air duct of the aircraft.

The air conditioning compressor 520 is generally configured to compress the flow of air within the air cycle line 470 by converting kinetic energy of the flow of air into pressure energy and heat energy. The air conditioning compressor 520 may be any suitable type of compressor. The air conditioning compressor 520 may preferably be a centrifugal compressor. As a consequence of the compression process, a pressure and/or a temperature of the flow of air within the air cycle line 470 discharged from the air conditioning compressor 520 is significantly higher than a pressure and/or a temperature of the flow of air provided to the air conditioning compressor 520. As described below, the air conditioning compressor 520 may be at least partially driven by the air conditioning turbine 570.

The flow of air within the air cycle line 470 which has been discharged by the air conditioning compressor 520 is then provided to the second heat exchanger 530 through which the flow of air is conveyed. Heat is rejected from the flow of air within the second heat exchanger 530, such that the flow of air is cooled therein. The second heat exchanger 530 may reject heat to ambient air, for example, in which case the second heat exchanger 530 may be referred to as a second air-to-air heat exchanger 530. Further, it may be that the second heat exchanger 530 is at least partially disposed within a ram air duct of an aircraft, such that the second heat exchanger 530 rejects heat to ambient air drawn through the ram air duct of the aircraft.

The flow of air within the air cycle line discharged from the second heat exchanger 530 is then passed through the first channel 542 of the reheater 540. The flow of air is further cooled within the first reheater channel 542 and is subsequently provided to the first condenser channel 552 of the condenser 550 in which the flow of air is further cooled such that the temperature of the flow of air within the first condenser channel 552 falls below the dew point at which moisture within the flow of air condenses and water droplets are formed within the flow of air. As described in further detail below, the flow of air within the first reheater channel 542 is regeneratively cooled by the flow of air within a second reheater channel 544 while the flow of air within the first condenser channel 552 is cooled by the flow of air within the second condenser channel 554.

The flow of air is then passed through the water extractor 560 in which water droplets within the flow of air are removed prior to being supplied to further components of the air cycle line 470. The water extractor 560 may be, for example, a cyclonic separator or the like. In any example, the water extractor 560 may comprise a plurality of swirl vanes configured to extract liquid water droplets from the flow of air by making use of a centrifugal effect. The water extractor 560 may be further configured to discharge the extracted water onto the secondary heat exchanger 530 to assist in its cooling function.

Next, the flow of air is provided to the second reheater channel 544 in which the flow of air regeneratively receives heat from the flow of air within the first reheater channel 542 before being provided to the air conditioning turbine 570. The air conditioning turbine 570 is generally configured to expand the flow of air within the air cycle line 470 by converting pressure energy and heat energy of the flow of air into kinetic energy. In addition, the air conditioning turbine 570 is configured to extract mechanical work from the flow of air within the air cycle line 470 and to drive the air conditioning compressor 520 via the bootstrap shaft 580. The air conditioning turbine 570 may be any suitable type of turbine. As a consequence of the expansion process, a pressure and/or a temperature of the flow of air within the air cycle line 470 discharged from the air conditioning turbine 570 is significantly lower than a pressure and/or a temperature of the flow of air provided to the air conditioning turbine 570.

The flow of air in the air cycle line 470 which has been discharged from the air conditioning turbine 570 is then conveyed through the second condenser channel 554 of the condenser 550 in which the flow of air is heated by the flow of air within the first condenser channel 552 such that the temperature of the flow of air within the second condenser channel 554 rises prior to being discharged for supply to the airframe port 452. Finally, the flow of air is discharged from the second condenser channel 554 for supply to the airframe port 452. In some examples, the air treatment apparatus 460 is configured to mix air from the air cycle line 470 at a location which is downstream of the second condenser channel 554. In various examples, it may be that the air treatment apparatus 460 is configured to mix air from the air cycle line 470 with air from the diversion line 480 at a location between the air conditioning turbine 570 and the second condenser channel 554 so as to control the temperature of air for discharge to the airframe port 452.

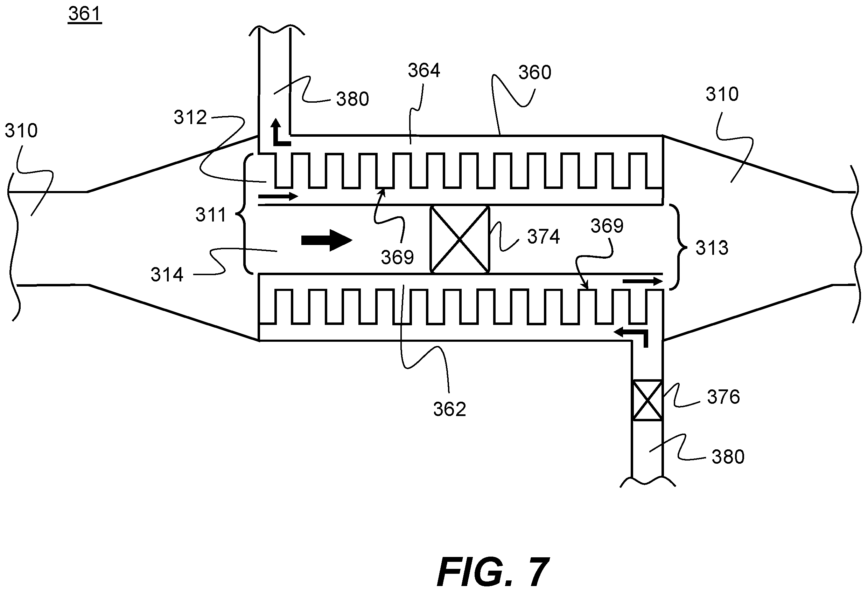

**Figure** 7 schematically shows an example of a selective heat exchange module 361 configured to form a portion of a delivery line as envisaged in the disclosure, such as the delivery line 310 of Figure 4. The selective heat exchange module 361 integrates a heat exchanger 360 as described above with respect to Figure 4, a valve arrangement as described above with respect to Figure 4 (although in this example not comprising a second valve configured to restrict flow along the cooling path 312), and a bypass path 314 as described above with respect to Figure 4.

The selective heat exchange module 361 has a nested arrangement in which the bypass path 314 extends through the cooling path 312. However, it will be appreciated that in other examples, the selective heat exchange module 361 may have a nested arrangement in which the cooling path 312 extends through the bypass path 314.

The valve 374 is disposed along the bypass path 314 within the selective heat exchange module 361 and is configured to selectively restrict flow along the bypass path 314 and thereby vary a proportion of the compressed air conveyed by the delivery line 310 which flows along the cooling path 312, as described above.

The valve arrangement 370 further comprise a coolant valve 376 disposed along the coolant line 380 extending to a coolant side 364 of the heat exchanger 360, as described above with respect to Figure 4. In other examples, the coolant valve 376 may be omitted or located elsewhere, such as within the heat exchanger 360 (e.g., within the coolant side 364 of the heat exchanger) or between the heat exchanger 360 and the external environment 4. Although the valve arrangement for the example selective heat exchange module 361 of Figure 7 does not comprise a valve configured to selectively restrict flow through the cooling path 312, it will be appreciated that in other examples such a valve and respective control functionality may be provided.

The inclusion of the selective heat exchange module 361 may enable a more compact air pressurisation system 401. In particular, the nested arrangement of the bypass path 314 and the cooling path 312 may enable the selective heat exchange module 361 to have a smaller installation size and may allow the selective heat exchange module 361 to be more easily installed within an installation space of a gas turbine engine.

In the specific example of Figure 7, the cooling path 312 through the compressed air side 362 of the heat exchanger 360 has a tortuous geometry which is configured to provide a large interfacial area between the compressed air in the compressed air side 362 of the heat exchanger 360 and the coolant in the coolant side 364 of the heat exchanger 360, for efficient heat transfer between the compressed air and the coolant within the heat exchanger 360. The tortuous geometry (e.g., cooling path 312) may enable a dimension (e.g., a length) of the heat exchanger to be relatively low, therefore permitting a relatively small installation size of the heat exchanger 360. However, the arrangement of the cooling path 312 may present a relatively large restriction to flow of the compressed air therethrough as a result of the tortuosity of the flow passage through the coolant side 362 of the heat exchanger 360. In such examples, the cooling path 312 may be referred to as a restrictive cooling path.

In other examples, the cooling path 312 through the compressed air side 362 of the heat exchanger 360 may extend through (or around) a plurality of cooling tubes (e.g., in a shell and tube heat exchanger), such that an interior (or an exterior) of each cooling tube forms the coolant side 364 of the heat exchanger 360 to provide a large interfacial area between the compressed air in the compressed air side 362 of the heat exchanger 360 and the coolant in the coolant side 364 of the heat exchanger 360. Similarly, other known heat exchanger arrangements, such as a fin and plate arrangement, may be used. Such arrangements may provide a similarly restrictive cooling path by virtue of the relatively narrow and/or tortuous channels and flow passages between and around the respective tubes and fins and may provide good heat transfer efficiency and permit a relatively small installation size of the heat exchanger 360.

In further examples, heat exchanger 360 may be constructed using an additive layer manufacturing (ALM) technique. In such examples, the cooling path 312 through the compressed air side 362 may extend through (or around) an internal topology of the heat exchanger 360 which has been formed using an ALM technique. Such an internal topology may provide a similarly restrictive cooling path to the examples described above and may also provide good heat transfer efficiency and therefore permit a relatively small installation size of the heat exchanger 360.

The total pressure drop between the blower compressor 420 and the airframe port 452 is a result of resistance to flow provided by various parts of the delivery line. As discussed above, it may be that the cooling path 312 presents a relatively large restriction to flow of compressed air therethrough. Accordingly, the cooling path 312 may present a relatively greater restriction to flow of the compressed air therethrough than flow through the bypass path (at least in a fully open state of the valve 374). The bypass path 314 may therefore have a relatively higher flow coefficient than the cooling path 312, as described elsewhere herein.

In the example of Figure 7, the catalyst material 369 is generally disposed on the interfacial area between the conditioned and compressed air in the compressed air side 362 of the heat exchanger 360 and the coolant in the coolant side 364 of the heat exchanger 360. This provides a large effective active area for the catalyst material 369, and thereby further promotes the removal of volatile organic compounds from gases conveyed by the delivery line 310 within the heat exchanger 360 by chemical conversion (e.g., catalysis). However, this disclosure anticipates that the catalyst material 369 may be located elsewhere within the heat exchanger 360.

The following description of operation of the air pressurisation system is given with respect to the first example air pressurisation system 401 of Figure 4 incorporating the heat exchange module 361 of Figure 7. When the air pressurisation system 401 is in the cooling mode, the aftercooling controller 390 controls the valve 374 to be in the closed state such that compressed air conveyed by the delivery line 310 flows through the delivery line 310 to the airframe port 452 via the cooling path 312. While flowing through the cooling path 312, compressed air conveyed by the delivery line 310 passes through the compressed air side 362 of the heat exchanger 360 to reject heat to coolant passing through the coolant side 364 of the heat exchanger 360. Consequently, the temperature of the conditioned and compressed air in the delivery line 310 is lower at the airframe port 452 than between the blower compressor 420 and the heat exchanger 360. Where present, the second valve 372 may be controlled by the aftercooling controller 390 to adopt the open state in the cooling mode.

When the air pressurisation system 401 is in the baseline mode, the aftercooling controller 390 controls the valve 374 to be in the open state such that compressed air conveyed by the delivery line 310 flows to the airframe port 452 via the bypass line 314. Where present, the second valve 372 may be controlled by the aftercooling controller 390 to adopt the closed state in the baseline mode, to prevent flow along the cooling path 312. In examples in which the valve arrangement 370 does not comprise the second valve 372, it may be that a portion of the compressed air conveyed by the delivery line 310 flows to the airframe port 452 via the cooling path 312. Because compressed air is permitted to flow through the bypass line 314 the total resistance to flow (i.e., the total pressure drop) provided by the delivery line 310 between the compressor 420 and the airframe port 452 may be reduced (and correspondingly the flow coefficient increased). Therefore, a power demand of the blower compressor 420 when operated in the blower mode may be reduced when the air pressurisation system 401 is operated in the baseline mode. In examples in which it is present, the second valve 372 may be controlled to adopt the closed state in the baseline mode so as to prevent unnecessary heating of the coolant within the heat exchanger 360.

Optionally, in examples in which the valve arrangement 370 comprises the coolant valve 376, the coolant valve 376 may be controlled by the aftercooling controller 390 to adopt the open state in the cooling mode and to adopt the closed state in the baseline mode, to prevent unnecessary heating of the coolant within the heat exchanger 360. It may be that the coolant line 380 forms part of a coolant system configured to provide cooling to other components of the gas turbine engine, such that preventing coolant flow to the heat exchanger 360 reduces a power demand of the coolant system. Otherwise, it may be that the coolant side 364 of the heat exchanger 360 is configured to receive coolant from the bypass duct 22 of the gas turbine engine 10 via the coolant line 380, such that air received from the bypass duct constitutes the coolant. It may be that, when the coolant valve 376 is controlled to adopt the closed state, an operating efficiency or thrust associated with the propulsive fan of the gas turbine engine may be improved, as no coolant flow is provided from the bypass duct Therefore, operating the coolant valve 376 in the closed state in the baseline mode may reduce an overall power and/or fuel consumption of the gas turbine engine.

The aftercooling controller 390 may be configured to receive a cooling signal relating to a temperature of conditioned and compressed air provided by the delivery line 310 and to control the valve arrangement 370 to switch between the baseline mode and the cooling mode based on the cooling signal. The cooling signal generally corresponds to a demand to cool the compressed air conveyed by the delivery line 310. Switching between the cooling mode and the baseline mode based on the cooling signal therefore enables the air pressurisation system 401 to be operated in the cooling mode only when there is a demand to cool the conditioned and compressed air provided by the delivery line 310. Otherwise, the aftercooling controller 390 may be configured to operate the air pressurisation system 401 in the baseline mode.

The cooling signal may be received from, for example, an external controller (such as an external controller associated with the airframe system 450). The external controller may be configured to monitor a temperature of air received by the airframe port 452 from the delivery line 310 using temperature monitoring apparatus. The cooling signal may be a signal provided by the external controller to the aftercooling controller 390 which is indicative of a demand to cool the air provided by the delivery line 310 to the airframe port 452 as a result of the temperature of the conditioned and compressed air provided by the delivery line 310.

Otherwise, the cooling signal may be provided by the upstream temperature sensor 492. The upstream temperature sensor 492 is configured to monitor a temperature of compressed air at an upstream monitoring location on the delivery line 310 between the mixing point 461 and the heat exchanger 360. Hence the cooling signal directly corresponds to the temperature of the compressed air at the upstream monitoring location. Accordingly, the aftercooling controller 390 may be configured to control the valve arrangement 370 to switch between operation of the air pressurisation system 401 in the baseline mode and the cooling mode based on the temperature monitored by the upstream temperature sensor 492 at the upstream monitoring location.

In variants of the example discussed above, the cooling signal may indirectly correspond to the temperature of conditioned and compressed air provided by the delivery line 310. In such examples, the cooling signal may correspond to an operating parameter of the gas turbine engine, such as an altitude of the gas turbine engine and/or an operating speed of the blower compressor 420, for example. The operating parameter of the gas turbine engine may be used by the aftercooling controller 390 to calculate the temperature of the conditioned and compressed air provided by the delivery line 310 by referencing a mathematical model of the gas turbine engine. The aftercooling controller 390 may control the valve arrangement 370 to switch between operation of the air pressurisation system 401 in the baseline mode and in the cooling mode based on the calculated temperature of the conditioned and compressed air provided by the delivery line 310.

For instance, the aftercooling controller 390 may be configured to control the valve arrangement 370 so as to cause the air pressurisation system 401 to switch from operation in the baseline mode to operation in the cooling mode in response to a determination that the calculated temperature of the conditioned and compressed air provided by the delivery line 310 is equal to or greater than the aftercooling temperature threshold.

Otherwise, it may be that the valve arrangement 370 is thermally activated. For example, it may be that the valve 374 is thermally-actuated and is configured to switch into the closed state when the temperature of conditioned and compressed air provided by the delivery line 310 is equal to or greater than the aftercooling temperature threshold and to switch into the open state when the temperature of conditioned and compressed air provided by the delivery line 310 is less than the aftercooling temperature threshold.

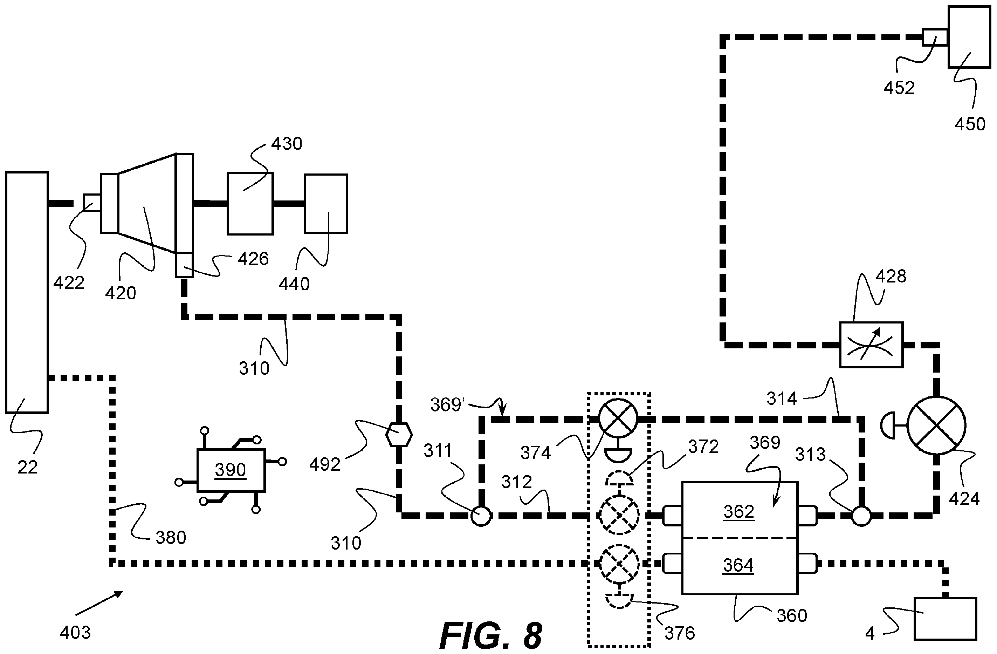

In general, the aftercooling temperature threshold may be dependent on a temperature limitation of the airframe system 450 or a temperature limitation of any intervening systems or networks between the airframe port 452 and the airframe system 450. The aftercooling temperature threshold may be, for example, between 200°C and 280°C. In particular, when the gas turbine engine is incorporated into an aircraft (as described with respect to Figure 8 below), the airframe port 452 may be in fluid communication with a wing ducting network which is configured to convey conditioned and compressed air supplied through the airframe port 452 to the airframe system 450. It may be that the wing ducting network is unable to tolerate a transient temperature of conditioned and compressed air conveyed therethrough in excess of approximately 260°C. Further, it may be that the wing ducting network is unable to tolerate a steady state temperature of conditioned and compressed air conveyed therethrough in excess of approximately 240°C. Accordingly, the aftercooling temperature threshold may be between 220°C and 260°C. Optionally, the aftercooling temperature threshold may be approximately equal to 240°C.

The aftercooling temperature threshold may be defined with respect to the upper airframe system air temperature threshold discussed above. By way of example, the aftercooling temperature threshold may be defined to lie within a predetermined range of the upper airframe system air temperature threshold. By way of further example, the aftercooling temperature threshold may correspond to (e.g., be substantially equal to) the upper airframe system air temperature threshold. In particular, if there is a short-duration transient upper airframe system air temperature threshold, the aftercooling temperature threshold may correspond to (e.g., be substantially equal to) the steady state upper airframe system air temperature threshold.

The valve arrangement 370 may be controlled so that the or each of the valves adopt states corresponding to either of the baseline mode and the cooling mode, irrespective of whether the blower compressor 420 is operating in the blower mode or the engine drive mode. Nevertheless, it may be that a demand to cool the compressed air conveyed by the delivery line 310 corresponds to the blower mode, such that in the aftercooling controller 390 is configured to control the valve arrangement 370 to operate the air pressurisation system 401 in the cooling mode only when the blower compressor 420 is operated in the blower mode. The aftercooling controller 390 may be configured to control the valve arrangement 370 to switch between the baseline mode and the cooling mode when the blower compressor 420 is operated in the blower mode.

In other examples, it may be that a valve arrangement for an air pressurisation system as envisaged in the present disclosure is not configured to selectively divert conditioned and compressed air within a delivery line to a heat exchanger for operation in a cooling mode. Instead, it may be that a valve arrangement is provided to selectively provide coolant to the heat exchanger for operation in the cooling mode.

A third example air pressurisation system 403 for supplying air to an airframe system 450 is shown schematically in **Figure** 8. The third example air pressurisation system 403 shown in Figure 8 is generally similar to the first example air pressurisation system 401 shown in Figure 4, with like reference numerals being used to indicate common features. However, in contrast to the first example air pressurisation system 401 and the second example air pressurisation system 402, the third example air pressurisation system 403 does not comprise an air treatment apparatus 460, an air supply mode controller 490 or a downstream temperature sensor 392. As a result, the delivery line 310 is configured to directly convey gases received from the blower compressor 420 to the airframe port 452 via the heat exchanger 360.

In addition, the third example air pressurisation system 403 does not comprise a core bleed line 410 as described above with respect to Figures 4 and 5. Nevertheless, this disclosure anticipates that in some variants of the third example air pressurisation system 403, a core bleed line 410 as described above with respect to Figures 4 and 5 may be included and configured to provide the second inlet flow of gases to the delivery line 310 (e.g., upstream of the upstream junction 311). If so, an air supply mode controller 490 may be provided and configured to selectively operate the air pressurisation system 403 in an augmented air supply mode and in an unaugmented air supply mode as described above.

Consequently, the heat exchanger 360 is configured to transfer heat from compressed air discharged into the delivery line 310 by the blower compressor 420 (and optionally also from the core bleed line 410, if present and if the air pressurisation system 403 is operated in the augmented air supply mode) to a coolant. In other words, the heat exchanger 360 is configured to receive compressed air from the blower compressor 420 (and optionally also from the core bleed line 410, if present and if the air pressurisation system 403 is operated in the augmented air supply mode) for heat exchange with the coolant and to discharge the compressed air to the airframe port via the delivery line 310 for supply to the airframe system 450.

In the third example, the air pressurisation system 403 comprises a cooling path 312 and a bypass path 314, and a valve arrangement 370 for controlling the flow of compressed gases through the cooling path and bypass path respectively, as described above. However, in other examples, the bypass path 314 may be omitted.

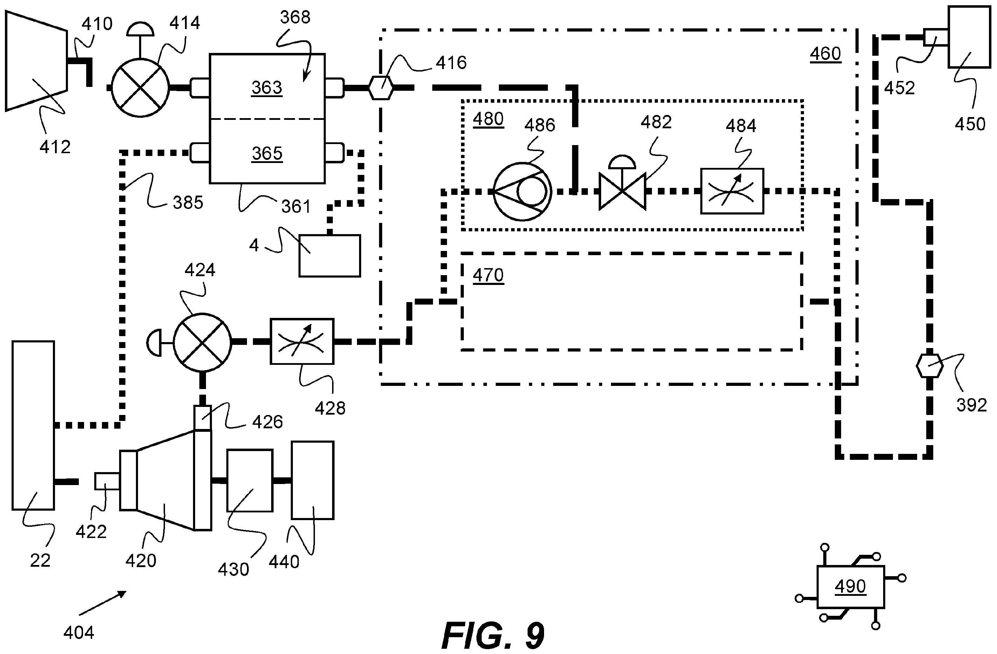

A fourth example air pressurisation system 404 for supplying air to an airframe system 450, this example not falling within the scope of the claims, is shown schematically in **Figure 9****.** The fourth example air pressurisation system 404 shown in Figure 9 is generally similar to the first example air pressurisation system 401 described above with respect to Figure 4, with common or similar features being indicated by like reference numerals.

In contrast to the first example air pressurisation system 401, the fourth example air pressurisation system 404 does not comprise a heat exchanger 360, a cooling path 312, a bypass path 314, an upstream junction 311, a downstream junction 313, a valve arrangement 370, a coolant line 380, or an aftercooling controller 390. However, the fourth example air pressurisation system 404 comprises a heat exchanger 361 which is configured to remove heat from the second inlet flow of gases within the core bleed line 410. The heat exchanger 361 may be mounted on the gas turbine engine. The remaining features of the fourth example air pressurisation system 404 are generally as described with respect to the first example air pressurisation system 401. In particular, the air supply mode controller 490 may be generally configured to operate in the same manner as that described with respect to the first example air pressurisation system 401, mutatis mutandis. In further examples, the air pressurisation system 404 may not comprise the air treatment apparatus 460, or the engine core bleed line 410 may be configured to mix the second inlet flow of air with the first inlet flow of air from the blower compressor 420 at a mixing point 461 located on the delivery line 310 upstream of a bifurcation between the air cycle line 470 and the diversion line 480 (and preferably upstream of the air treatment apparatus 460).

The heat exchanger 361 is configured to transfer heat from the second inlet flow of gases within the core bleed line 410 to a coolant. In other words, the heat exchanger 361 is configured to receive compressed air from the compressor 412 for heat exchange with the coolant and to discharge the compressed air to the airframe port 452 via the delivery line 310 for supply to the airframe system 450. To this end, the heat exchanger 361 has a compressed air side 363 which forms a portion of the core bleed line 410 extending through the heat exchanger 361. The heat exchanger 361 also has a coolant side 365 configured to receive a coolant for heat exchange with compressed air in the compressed air side 363. A coolant line 385 extends through the coolant side 365 of the heat exchanger 361 such that the heat exchanger 361 is configured to receive coolant via the coolant line 385.

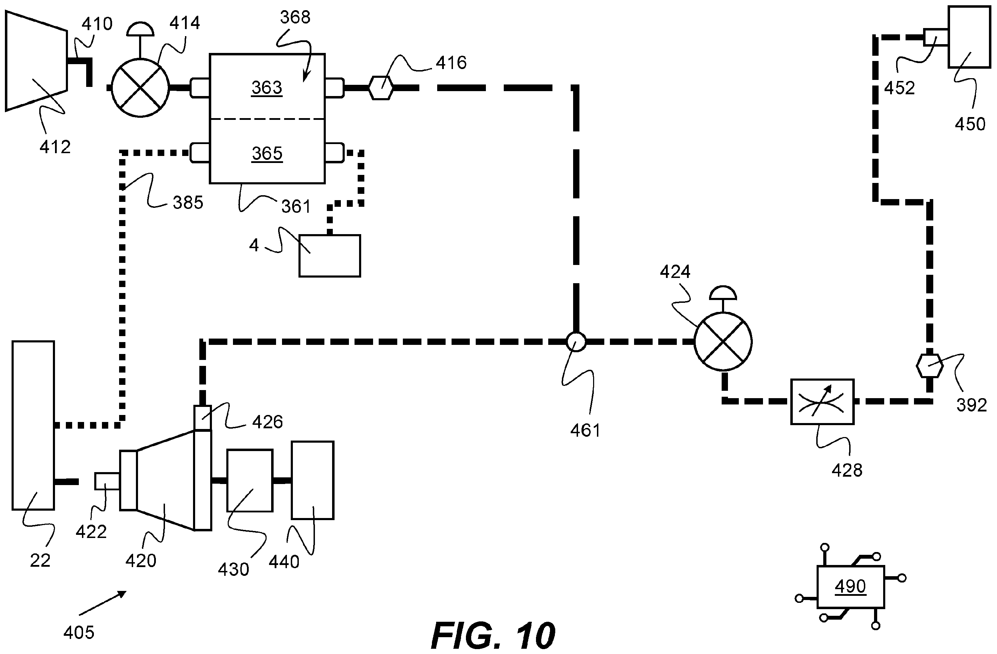

Generally, a coolant side of a heat exchanger 361 as envisaged in the present disclosure may be configured to receive coolant comprising, for example, air, combustible fuel, oil, lubricant fluid, water, glycol, hydraulic fluid and/or refrigerant fluid. The coolant side 365 of the heat exchanger 361 in the example of Figure 10 is configured to receive coolant from the bypass duct 22 of the gas turbine engine 10 via the coolant line 385, such that air received from the bypass duct constitutes the coolant. As shown in the example of Figure 10, the heat exchanger 361 may be configured to discharge coolant to an external environment 4 in a similar manner to that described above in regards to the heat exchanger 360 of the first, second and third example air pressurisation systems 401, 402, 403.

In further contrast to the first example air pressurisation system 401, in the fourth example air pressurisation system 404, the engine core bleed line 410 is configured to provide the second inlet flow of air directly to the diversion line 480 of the air treatment apparatus 460 downstream of a diversion line non-return valve (NRV) 486. When the air pressurisation system 401 switches to the augmented air supply mode, the opening of the core bleed line control valve 414 causes a pressure of air downstream of the diversion line NRV 486 to rise above a pressure of air upstream of the diversion line NRV 486 such that the diversion line NRV 486 closes and the diversion line 486 is fed with the second inlet flow of air from the compressor 412 supplied by the engine core bleed line 410, rather than the first inlet flow of air from the blower compressor 420. In other words, the NRV 486 is configured to prevent the second inlet flow of air from flowing along the diversion line 480 toward the blower compressor 420 and/or the air cycle line 460. The core bleed control valve 414 and/or the core bleed line (e.g., a cross-sectional flow area) may be configured to prevent the second inlet flow being provided to the air treatment apparatus 460 at an excessive pressure. For example, the core bleed control valve 414 may be configured to permit the second inlet flow therethrough at a maximum pressure setting which may be, for example, approximately 30 psia (approximately 200 kPa). The maximum pressure may be the same as a maximum pressure that can be delivered from the blower compressor. The maximum pressure may be slightly higher than the maximum pressure that can be delivered from the blower compressor, to ensure that the non-return valve on the diversion line can be closed in the augmented mode.

The airframe system 450 draws a combined mass flow rate from the first inlet flow and the second inlet flow according to the flow demand, with the air treatment apparatus 460 determining the mix of the first inlet flow and the second inlet flow (provided into the diversion line 480) based on the temperature-based control as described above with respect to Figure 4. The contribution of the second inlet flow of air to the total flow rate of air provided to the airframe port 452 via the diversion line 480 may be up to 5% of the total flow rate of air (e.g., of the total mass-flow rate), up to 10% of the total flow rate of air, or more.

A fifth example air pressurisation system 405 for supplying air to an airframe system 450, this example not falling within the scope of the claims, is shown schematically in **Figure 10****.** The fifth example air pressurisation system 405 shown in Figure 10 is generally similar to the fourth example air pressurisation system 404 described above with respect to Figure 9, with common or similar features being indicated by like reference numerals.

Unlike the fourth example air pressurisation system 404, the fifth example air pressurisation system 405 does not comprise an air treatment apparatus 460. Therefore, the engine core bleed line 410 is configured to mix the second inlet flow of air with the first inlet flow of air from the blower compressor 420 at a mixing point 461 located on the delivery line 310 upstream of the airframe port 452, and the core bleed line 410 is configured to provide the second inlet flow of gases from the compressor 412 of the core of the gas turbine engine directly to the delivery line 310 at the mixing point 461 (in the augmented air supply mode of the air pressurisation system 405).

In each of the fourth and fifth example air pressurisation systems 404, 405, a catalyst material 368 is disposed within the heat exchanger 361. The catalyst material 368 is configured to catalyse a reaction, e.g., an oxidation reaction, of volatile organic compounds (e.g., hydrocarbons) within the gases conveyed by the core bleed line 410. Specifically, in the example of Figure 10, the catalyst material 368 is disposed within the compressed air side 363 of the heat exchanger 361. The catalyst material 368 is similar to the catalyst material 369 described above with respect to each of the first, second and third example pressurisation systems 401, 402, 403. In particular, the catalyst material 368 may preferably include copper (e.g., copper oxide), vanadium (e.g., vanadium oxide), platinum, palladium, rhodium, cerium, iron, manganese and/or nickel.

While the catalyst material 368 is described as being disposed within the heat exchanger 361 in each of the fourth example air pressurisation system 404 and the fifth example air pressurisation system 405, it will be appreciated that the catalyst material 368 may be disposed elsewhere. For instance, the catalyst material 368 may be disposed along the core bleed line 410 in addition to, or instead of, being disposed within the heat exchanger 361. For example, the catalyst material 369 may be disposed along the core bleed line 410 upstream of the heat exchanger 361 (that is, between the compressor 410 and the heat exchanger 361, and preferably between the core bleed control valve 414 and the heat exchanger 361).

In accordance with the fifth example air pressurisation system 405, a catalyst material 369 as described above with respect to Figures 4 and 5 (not shown) may be disposed along the delivery line 310 (e.g., downstream of the mixing point 461) in addition to the catalyst material 368 described above. If so, the delivery line 310 may also extend through a heat exchanger 360 as described above with respect to Figures 4 and 5 (that is, an additional heat exchanger 360), with the catalyst material 369 optionally being disposed within the heat exchanger 360.

A catalytic performance of the catalyst material 368 may be substantially dependent on the temperature of the air to which it is subjected (e.g., compared to a light-off temperature of the catalyst material 368). The temperature of the air discharged conveyed from the compressor 412 by the core bleed line 410 will usually be in excess of 150°C (and may optionally be in excess of 200°C, in excess of 300°C, in excess of 350°C or in excess of 400°C). Accordingly, the catalytic performance of the catalyst material 368 may be promoted by being disposed along the core bleed line 410 or within the heat exchanger 361.

Further, the second inlet flow of air is only conveyed by the core bleed line 410 when the air pressurisation system 404, 405 is operated in the augmented air supply mode. It follows that an operational time in which the catalyst material 368 is subject to a flow of air may be relatively reduced, which is associated with a reduced rate of degradation of the catalytic performance of the catalyst material 368 and therefore an extended life of the catalyst material 368.

If the catalyst material 368 is disposed within the heat exchanger 361, the catalyst material 368 may be advantageously regenerated and/or recoated (e.g., old catalyst material 368 stripped and new catalyst material 368 reapplied) at a maintenance interval (e.g., an overhaul) of a gas turbine engine 10. As a result, the catalytic performance of the catalyst material 368 to be easily maintained at an appropriate level throughout a lifetime of the airframe system 450.

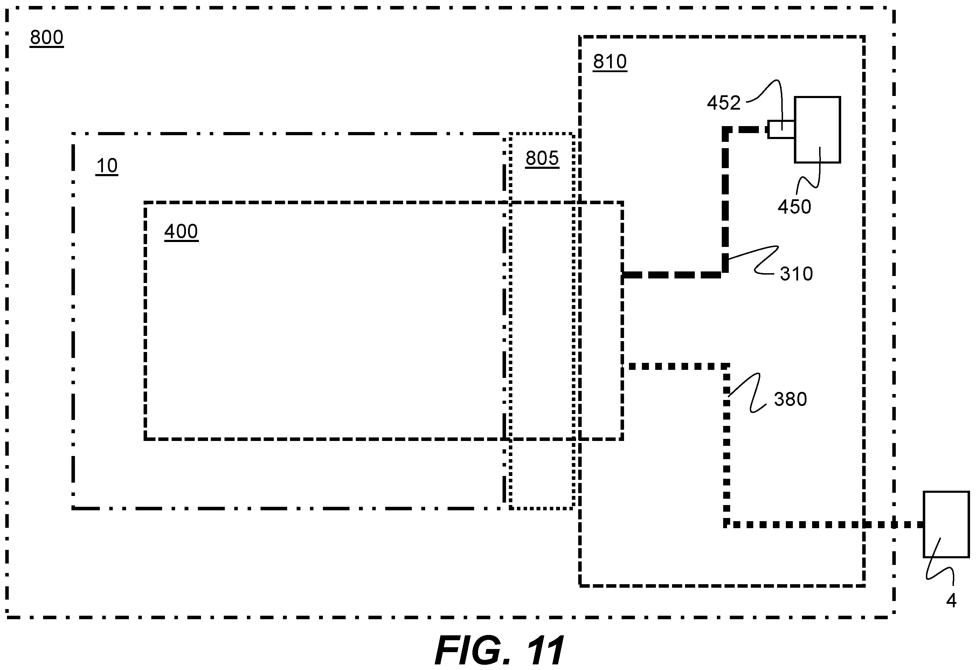

**Figure** 11 shows a schematic view of an aircraft 800 which includes an airframe 810, a gas turbine engine 10, a pylon 805 and an air pressurisation system 400. The pylon 805 is configured to attach the gas turbine engine 10 to the airframe 810 (e.g., to a wing of the airframe 810), as will be appreciated by those of ordinary skill in the art. The gas turbine engine 10 may be in accordance with the gas turbine engine 10 described above with reference to Figures 1 to 3. The air pressurisation system 400 may have any suitable combination of the features described above with respect to each example air pressurisation system 401, 402, 403, 404, 405 and Figures 4 to 10. The air pressurisation system 400 may be at least partially disposed within the gas turbine engine 10, at least partially disposed within the pylon 805 and/or at least partially disposed within the airframe 810. For instance, the blower compressor 420 may be disposed within the gas turbine engine 10 whereas the air treatment apparatus 460 (if present) may be disposed within the airframe 810. The airframe 810 comprises the airframe system 450 to which the airframe port 452 is configured to supply conditioned and compressed (i.e., pressurised) air from the air pressurisation system 400. The catalyst material 369, 369', and optionally the heat exchanger 360 and/or the heat exchanger 361 as applicable, may be disposed within the gas turbine engine 10 or within the pylon 805. In some examples, the blower compressor SOV 424 may be located at or upstream of a boundary between the gas turbine engine 10 and the airframe 810 or located at or upstream of a boundary between the pylon 805 and the airframe 810 to prevent supply of compressed air to the airframe 810 at an excessive pressure and/or an excessive temperature. Accordingly, the blower compressor SOV 424 may protect an airframe ducting system (e.g., a wing ducting system) from compressed air being supplied at an excessive pressure and/or an excessive temperature.

This disclosure contemplates that the functions described with respect to each of the aftercooling controller 390 and the air supply mode controller 490, if both are present, may be achieved by a single (e.g., unified) air pressurisation system controller. Further, it will be appreciated that any of the aftercooling controller 390, the air supply mode controller 490 and/or the single air pressurisation system controller as referred to herein may be or form a part of a multifunctional controller configured to control multiple systems of the gas turbine engine 10, which may be referred to in the art as an electronic engine controller (EEC).

It will be understood that the invention is not limited to the embodiments above-described and various modifications and improvements falling within the scope of the appended claims can be made without departing from the concepts described herein. Except where mutually exclusive, any of the features may be employed separately or in combination with any other features and the disclosure extends to and includes all combinations and sub-combinations of one or more features described herein, provided that they fall within the scope of protection defined by the appended claims.

## Claims

1. An air pressurisation system (400, 401, 402, 403, 404, 405) for an aircraft (800), the air pressurisation system comprising:
a blower compressor (420) configured to be mechanically coupled to a spool (440) of a gas turbine engine (10) and configured to receive an inlet flow of gases from a bypass duct (22) of the gas turbine engine;
a heat exchanger (360);
a delivery line (310) extending through the heat exchanger and configured to convey gases received from the blower compressor (420) to an airframe port (452) for supply to an airframe system (450);
a catalyst material (369, 369') disposed along the delivery line within the heat exchanger or between the blower compressor (420) and the heat exchanger and configured to catalyse a reaction of volatile organic compounds within gases conveyed by the delivery line;
a valve arrangement (370) configured to switch between operation of the air pressurisation system in a baseline mode in which the valve arrangement is configured to allow compressed gases to bypass the heat exchanger (360), and a cooling mode in which the valve arrangement is configured to divert the compressed air within the delivery line (310) to the heat exchanger (360) for operation in the cooling mode, and
wherein the delivery line (310) comprises a cooling path (312) extending through the heat exchanger and a bypass path (314) bypassing the heat exchanger; the valve arrangement is configured to selectively divert conditioned air within the delivery line to the heat exchanger for operation in the cooling mode by actuating a first valve (372, 374) of the valve arrangement (370) to control a flow rate of conditioned air through the cooling path; and the catalyst material (369) is disposed along the cooling path.

2. The air pressurisation system (400, 401, 402, 404, 405) of claim 1, wherein the inlet flow of gases is a first inlet flow of gases, and wherein the air pressurisation system further comprises a core bleed line (410) configured to provide a second inlet flow of gases from a compressor (412) of the gas turbine engine to the delivery line (310) in an augmented air supply mode of the air pressurisation system.

3. The air pressurisation system (400, 401, 402, 404, 405) of claim 2, wherein the catalyst material (369, 369') is configured to catalyse a reaction of hydrocarbons within gases received from the core bleed line (410).

4. The air pressurisation system (400, 401, 402, 404, 405) of claim 2 or claim 3, comprising an additional catalyst material (368) disposed along the core bleed line (410) and configured to catalyse a reaction of volatile organic compounds within gases conveyed by the core bleed line.

5. The air pressurisation system (400, 401, 402, 404, 405) of claim 4, comprising an additional heat exchanger (361), and wherein the core bleed line (410) extends through the additional heat exchanger; and the additional catalyst material (368) is disposed within the additional heat exchanger or between the additional heat exchanger and the compressor (412) of the gas turbine engine (10).

6. The air pressurisation system (400, 401, 402, 404) of any preceding claim, comprising an air treatment apparatus (460) including an air cycle line (470) configured to condition gases received from the blower compressor (420), wherein the delivery line (310) is configured to convey compressed gases through the air cycle line of the air treatment apparatus to the airframe port (452) for supply to the airframe system (450).

7. The air pressurisation system (400, 401, 402, 404) of claim 6, wherein:
the inlet flow of gases is a first inlet flow of gases;
the air pressurisation system further comprises a core bleed line (410) configured to provide a second inlet flow of gases from a compressor (412) of the gas turbine engine to the delivery line (310) in an augmented air supply mode of the air pressurisation system;
the air treatment apparatus (460) further comprises a diversion line (480) for receiving air from the blower compressor (420) and configured to bypass the air cycle line (470);
the air treatment apparatus is configured to mix air from the air cycle line with air from the diversion line to control a temperature of gases received by delivery line (310); and
the core bleed line (410) is further configured to:
provide the second inlet flow of gases directly to the diversion line (480); or
mix the second inlet flow of gases with gases from the blower compressor (420) upstream of the diversion line.

8. The air pressurisation system (400, 401, 402, 404, 405) of claim 2 or any claim dependent thereon, comprising a control valve (414) disposed on the core bleed line (410) and a controller (490) configured to receive a flow demand signal which corresponds to the flow demand of the airframe system, control the control valve (414) and thereby selectively operate the air pressurisation system in: the augmented air supply mode in which the control valve is open, or an unaugmented air supply mode in which the control valve is closed to prevent the second inlet flow of air to the delivery line, .

9. The air pressurisation system (400, 401) of any preceding claim, wherein:
the inlet flow of gases is a first inlet flow of gases;
the air pressurisation system further comprises a core bleed line (410) configured to provide a second inlet flow of gases from a compressor (412) of the gas turbine engine to the delivery line (310) in an augmented air supply mode of the air pressurisation system;
the system further comprises a controller (390) configured to control the valve arrangement (370) so as to maintain operation in the cooling mode when the air pressurisation system is operated in the augmented air supply mode.

10. The air pressurisation system (400, 401, 403) of any preceding claim, comprising a further catalyst material (369') disposed along the bypass path (314).

11. The air pressurisation system (400, 401, 402, 403) of any of claims 7 to 9, comprising: a temperature sensor (492) configured to monitor a temperature of compressed air at an upstream monitoring location on the delivery line (310) between the blower compressor (420) and the heat exchanger (360), and a controller (390) configured to control the valve arrangement (370) to switch between operation in the baseline mode and the cooling mode based on the monitored temperature at the monitored location.

## Patentansprüche

1. Luftdruckbeaufschlagungssystem (400, 401, 402, 403, 404, 405) für ein Luftfahrzeug (800), wobei das Luftdruckbeaufschlagungssystem Folgendes umfasst:
einen Gebläsekompressor (420), der dazu konfiguriert ist, mechanisch an eine Spule (440) eines Gasturbinentriebwerks (10) gekoppelt zu sein, und dazu konfiguriert ist, eine Einlassströmung von Gasen aus einer Umgehungsleitung (22) des Gasturbinentriebwerks aufzunehmen;
einen Wärmetauscher (360);
eine Zuführleitung (310), die sich durch den Wärmetauscher erstreckt und dazu konfiguriert ist, aus dem Gebläsekompressor (420) aufgenommene Gase zu einer Flugwerköffnung (452) zur Zufuhr zu einem Flugwerksystem (450) zu befördern;
ein Katalysatormaterial (369, 369'), das entlang der Zuführleitung innerhalb des Wärmetauschers oder zwischen dem Gebläsekompressor (420) und dem Wärmetauscher angeordnet und dazu konfiguriert ist, eine Reaktion flüchtiger organischer Verbindungen innerhalb von durch die Zuführleitung geförderten Gasen zu katalysieren;
eine Ventilanordnung (370), die dazu konfiguriert ist, zwischen einem Betrieb des Luftdruckbeaufschlagungssystems in einem Basismodus, in dem die Ventilanordnung dazu konfiguriert ist, es komprimierten Gasen zu ermöglichen, den Wärmetauscher (360) zu umgehen, und einem Kühlmodus, in dem die Ventilanordnung dazu konfiguriert ist, die komprimierte Luft innerhalb der Zuführleitung (310) zu dem Wärmetauscher (360) zu einem Betrieb in dem Kühlmodus umzuleiten, umzuschalten, und
wobei die Zuführleitung (310) einen Kühlweg (312), der sich durch den Wärmetauscher erstreckt, und einen Umgehungsweg (314) umfasst, der den Wärmetauscher umgeht; die Ventilanordnung dazu konfiguriert ist, konditionierte Luft innerhalb der Zuführleitung selektiv zu dem Wärmetauscher zu einem Betrieb in dem Kühlmodus umzuleiten, indem ein erstes Ventil (372, 374) der Ventilanordnung (370) betätigt wird, um eine Durchflussmenge von konditionierter Luft durch den Kühlweg zu steuern; und das Katalysatormaterial (369) entlang des Kühlwegs angeordnet ist.

2. Luftdruckbeaufschlagungssystem (400, 401, 402, 404, 405) nach Anspruch 1, wobei die Einlassströmung von Gasen eine erste Einlassströmung von Gasen ist und wobei das Luftdruckbeaufschlagungssystem ferner eine Kernabströmleitung (410) umfasst, die dazu konfiguriert ist, eine zweite Einlassströmung von Gasen von einem Kompressor (412) des Gasturbinentriebwerks zu der Zuführleitung (310) in einem erhöhten Luftzufuhrmodus des Luftdruckbeaufschlagungssystems bereitzustellen.

3. Luftdruckbeaufschlagungssystem (400, 401, 402, 404, 405) nach Anspruch 2, wobei das Katalysatormaterial (369, 369') dazu konfiguriert ist, eine Reaktion von Kohlenwasserstoffen innerhalb von aus der Kernabströmleitung (410) aufgenommenen Gasen zu katalysieren.

4. Luftdruckbeaufschlagungssystem (400, 401, 402, 404, 405) nach Anspruch 2 oder Anspruch 3, umfassend ein zusätzliches Katalysatormaterial (368), das entlang der Kernabströmleitung (410) angeordnet ist und dazu konfiguriert ist, eine Reaktion flüchtiger organischer Verbindungen innerhalb von durch die Kernabströmleitung geförderten Gasen zu katalysieren.

5. Luftdruckbeaufschlagungssystem (400, 401, 402, 404, 405) nach Anspruch 4, umfassend einen zusätzlichen Wärmetauscher (361), und wobei sich die Kernabströmleitung (410) durch den zusätzlichen Wärmetauscher erstreckt; und das zusätzliche Katalysatormaterial (368) innerhalb des zusätzlichen Wärmetauschers oder zwischen dem zusätzlichen Wärmetauscher und dem Kompressor (412) des Gasturbinentriebwerks (10) angeordnet ist.

6. Luftdruckbeaufschlagungssystem (400, 401, 402, 404) nach einem vorhergehenden Anspruch, umfassend eine Luftbehandlungsvorrichtung (460), die eine Luftzyklusleitung (470) beinhaltet, die dazu konfiguriert ist, aus dem Gebläsekompressor (420) aufgenommene Gase zu konditionieren, wobei die Zuführleitung (310) dazu konfiguriert ist, komprimierte Gase durch die Luftzyklusleitung der Luftbehandlungsvorrichtung zu der Flugwerköffnung (452) zur Zufuhr zu dem Flugwerksystem (450) zu befördern.

7. Luftdruckbeaufschlagungssystem (400, 401, 402, 404) nach Anspruch 6, wobei:
die Einlassströmung von Gasen eine erste Einlassströmung von Gasen ist;
das Luftdruckbeaufschlagungssystem ferner eine Kernabströmleitung (410) umfasst, die dazu konfiguriert ist, eine zweite Einlassströmung von Gasen von einem Kompressor (412) des Gasturbinentriebwerks zu der Zuführleitung (310) in einem erhöhten Luftzufuhrmodus des Luftdruckbeaufschlagungssystems bereitzustellen;
die Luftbehandlungsvorrichtung (460) ferner eine Umlenkleitung (480) zum Aufnehmen von Luft aus dem Gebläsekompressor (420) umfasst und dazu konfiguriert ist, die Luftzyklusleitung (470) zu umgehen;
die Luftbehandlungsvorrichtung dazu konfiguriert ist, Luft aus der Luftzyklusleitung mit Luft aus der Umlenkleitung zu mischen, um eine Temperatur von Gasen zu steuern, die durch die Zuführleitung (310) aufgenommen werden; und
die Kernabströmleitung (410) ferner zu Folgendem konfiguriert ist:
Bereitstellen der zweiten Einlassströmung von Gasen direkt zu der Umlenkleitung (480);
oder
Mischen der zweiten Einlassströmung von Gasen mit Gasen aus dem Gebläsekompressor (420) stromaufwärts der Umlenkleitung.

8. Luftdruckbeaufschlagungssystem (400, 401, 402, 404, 405) nach Anspruch 2 oder einem davon abhängigen Anspruch, umfassend ein Steuerventil (414), das an der Kernabströmleitung (410) angeordnet ist, und eine Steuerung (490), die dazu konfiguriert ist, ein Strömungsanforderungssignal zu empfangen, das der Strömungsanforderung des Flugwerksystems entspricht, um das Steuerventil (414) zu steuern und dadurch das Luftdruckbeaufschlagungssystem selektiv wie folgt zu betreiben: in dem erhöhten Luftzufuhrmodus, in dem das Steuerventil offen ist, oder einem nicht erhöhten Luftzufuhrmodus, in dem das Steuerventil geschlossen ist, um die zweite Einlassströmung von Luft zu der Zuführleitung zu verhindern.

9. Luftdruckbeaufschlagungssystem (400, 401) nach einem vorhergehenden Anspruch, wobei:
die Einlassströmung von Gasen eine erste Einlassströmung von Gasen ist;
das Luftdruckbeaufschlagungssystem ferner eine Kernabströmleitung (410) umfasst, die dazu konfiguriert ist, eine zweite Einlassströmung von Gasen von einem Kompressor (412) des Gasturbinentriebwerks zu der Zuführleitung (310) in einem erhöhten Luftzufuhrmodus des Luftdruckbeaufschlagungssystems bereitzustellen;
das System ferner eine Steuerung (390) umfasst, die dazu konfiguriert ist, die Ventilanordnung (370) zu steuern, um einen Betrieb in dem Kühlmodus aufrechtzuerhalten, wenn das Luftdruckbeaufschlagungssystem in dem erweiterten Luftzufuhrmodus betrieben wird.

10. Luftdruckbeaufschlagungssystem (400, 401, 403) nach einem vorhergehenden Anspruch, umfassend ein weiteres Katalysatormaterial (369'), das entlang des Umgehungswegs (314) angeordnet ist.

11. Luftdruckbeaufschlagungssystem (400, 401, 402, 403) nach einem der Ansprüche 7 bis 9, umfassend: einen Temperatursensor (492), der dazu konfiguriert ist, eine Temperatur von komprimierter Luft an einer stromaufwärtigen Überwachungsstelle an der Zuführleitung (310) zwischen dem Gebläsekompressor (420) und dem Wärmetauscher (360) zu überwachen, und eine Steuerung (390), die dazu konfiguriert ist, die Ventilanordnung (370) zu steuern, um auf Grundlage der überwachten Temperatur an der überwachten Stelle zwischen einem Betrieb in dem Basismodus und dem Kühlmodus umzuschalten.

## Revendications

1. Système de pressurisation d'air (400, 401, 402, 403, 404, 405) pour un aéronef (800), le système de pressurisation d'air comprenant :
un compresseur de ventilateur (420) conçu pour être couplé mécaniquement à un corps (440) d'un moteur à turbine à gaz (10) et conçu pour recevoir un flux d'entrée de gaz en provenance d'un conduit de dérivation (22) du moteur à turbine à gaz ;
un échangeur de chaleur (360) ;
une conduite de distribution (310) s'étendant à travers l'échangeur de chaleur et conçue pour transporter les gaz reçus en provenance du compresseur de ventilateur (420) vers un orifice de cellule (452) en vue de l'alimentation d'un système de cellule (450) ;
un matériau catalyseur (369, 369') disposé le long de la conduite de distribution à l'intérieur de l'échangeur de chaleur ou entre le compresseur de ventilateur (420) et l'échangeur de chaleur et conçu pour catalyser une réaction de composés organiques volatils dans les gaz transportés par la conduite de distribution ;
un agencement de soupape (370) conçu pour commuter entre le fonctionnement du système de pressurisation d'air dans un mode de base dans lequel l'agencement de soupape est conçu pour permettre aux gaz comprimés de contourner l'échangeur de chaleur (360), et un mode de refroidissement dans lequel l'agencement de soupape est conçu pour dévier l'air comprimé à l'intérieur de la conduite de distribution (310) vers l'échangeur de chaleur (360) pour un fonctionnement en mode de refroidissement, et
ladite conduite de distribution (310) comprenant un trajet de refroidissement (312) s'étendant à travers l'échangeur de chaleur et un trajet de dérivation (314) contournant l'échangeur de chaleur ; l'agencement de soupape étant conçu pour dévier sélectivement l'air conditionné à l'intérieur de la conduite de distribution vers l'échangeur de chaleur pour un fonctionnement en mode de refroidissement en actionnant une première soupape (372, 374) de l'agencement de soupape (370) pour commander un débit de
l'air conditionné à travers le trajet de refroidissement ; et ledit matériau catalyseur (369) étant disposé le long du trajet de refroidissement.

2. Système de pressurisation d'air (400, 401, 402, 404, 405) de la revendication 1, ledit flux d'entrée de gaz étant un premier flux d'entrée de gaz, et ledit système de pressurisation d'air comprenant en outre une conduite de prélèvement de noyau (410) conçue pour fournir un second flux d'entrée de gaz provenant d'un compresseur (412) du moteur à turbine à gaz à la conduite de distribution (310) dans un mode d'alimentation en air augmenté du système de pressurisation d'air.

3. Système de pressurisation d'air (400, 401, 402, 404, 405) de la revendication 2, ledit matériau catalyseur (369, 369') étant conçu pour catalyser une réaction d'hydrocarbures à l'intérieur de gaz reçus en provenance de la conduite de prélèvement de noyau (410).

4. Système de pressurisation d'air (400, 401, 402, 404, 405) selon la revendication 2 ou la revendication 3, comprenant un matériau catalyseur supplémentaire (368) disposé le long de la conduite de prélèvement de noyau (410) et conçu pour catalyser une réaction de composés organiques volatils dans les gaz transportés par la conduite de prélèvement de noyau.

5. Système de pressurisation d'air (400, 401, 402, 404, 405) de la revendication 4, comprenant un échangeur de chaleur supplémentaire (361), et ladite conduite de prélèvement de noyau (410) s'étendant à travers l'échangeur de chaleur supplémentaire ; et ledit matériau catalyseur supplémentaire (368) étant disposé à l'intérieur de l'échangeur de chaleur supplémentaire ou entre l'échangeur de chaleur supplémentaire et le compresseur (412) du moteur à turbine à gaz (10).

6. Système de pressurisation d'air (400, 401, 402, 404) d'une quelconque revendication précédente, comprenant un appareil de traitement d'air (460) comprenant une conduite de cycle d'air (470) conçue pour conditionner des gaz reçus en provenance du compresseur de ventilateur (420), ladite conduite de distribution (310) étant conçue pour transporter les gaz comprimés à travers la conduite de cycle d'air de l'appareil de traitement d'air vers l'orifice de cellule (452) en vue de l'alimentation du système de cellule (450).

7. Système de pressurisation d'air (400, 401, 402, 404) de la revendication 6 :
ledit flux d'entrée de gaz étant un premier flux d'entrée de gaz ;
ledit système de pressurisation d'air comprenant en outre une conduite de prélèvement de noyau (410) conçue pour fournir un second flux d'entrée de gaz provenant d'un compresseur (412) du moteur à turbine à gaz à la conduite de distribution (310) dans un mode d'alimentation en air augmenté du système de pressurisation d'air ;
ledit appareil de traitement d'air (460) comprenant en outre une conduite de déviation (480) destinée à recevoir l'air en provenance du compresseur de ventilateur (420) et conçue pour contourner la conduite de cycle d'air (470) ;
ledit appareil de traitement d'air étant conçu pour mélanger de l'air provenant de la conduite de cycle d'air avec de l'air provenant de la conduite de déviation afin de commander une température de gaz reçus par la conduite de distribution (310) ; et
ladite conduite de prélèvement de noyau (410) étant en outre conçue pour :
fournir le second flux d'entrée de gaz directement à la conduite de déviation (480) ; ou mélanger le second flux d'entrée de gaz avec les gaz provenant du compresseur de ventilateur (420) en amont de la conduite de déviation.

8. Système de pressurisation d'air (400, 401, 402, 404, 405) de la revendication 2 ou d'une quelconque revendication dépendante de celle-ci, comprenant une soupape de commande (414) disposée sur la conduite de prélèvement de noyau (410) et un dispositif de commande (490) conçu pour recevoir un signal de demande de flux qui correspond à la demande de flux du système de cellule, commander la soupape de commande (414) et ainsi faire fonctionner sélectivement le système de pressurisation d'air dans : le mode d'alimentation en air augmenté dans lequel la soupape de commande est ouverte, ou un mode d'alimentation en air non augmenté dans lequel la soupape de commande est fermée pour empêcher le second flux d'entrée d'air vers la conduite de distribution.

9. Système de pressurisation d'air (400, 401) d'une quelconque revendication précédente :
ledit flux d'entrée de gaz étant un premier flux d'entrée de gaz ;
ledit système de pressurisation d'air comprenant en outre une conduite de prélèvement de noyau (410) conçue pour fournir un second flux d'entrée de gaz provenant d'un compresseur (412) du moteur à turbine à gaz à la conduite de distribution (310) dans un mode d'alimentation en air augmenté du système de pressurisation d'air ;
ledit système comprenant en outre un dispositif de commande (390) conçu pour commander l'agencement de soupape (370) de façon à maintenir le fonctionnement en mode de refroidissement lorsque le système de pressurisation d'air fonctionne en mode d'alimentation en air augmenté.

10. Système de pressurisation d'air (400, 401, 403) d'une quelconque revendication précédente, comprenant un matériau catalyseur supplémentaire (369') disposé le long du trajet de dérivation (314).

11. Système de pressurisation d'air (400, 401, 402, 403) de l'une quelconque des revendications 7 à 9, comprenant : un capteur de température (492) conçu pour surveiller une température d'air comprimé au niveau d'un emplacement de surveillance en amont sur la conduite de distribution (310) entre le compresseur de ventilateur (420) et l'échangeur de chaleur (360), et un dispositif de commande (390) conçu pour commander l'agencement de soupape (370) pour commuter entre le fonctionnement en mode de base et le mode de refroidissement sur la base de la température surveillée au niveau de l'emplacement surveillé.
